(19) Europäisches Patentamt
European Patent Office
Office européen des brevets

(11) **EP 3 291 472 B1**

(12) **EUROPEAN PATENT SPECIFICATION**

(45) Date of publication and mention
of the grant of the patent:
**11.03.2020 Bulletin 2020/11**

(51) Int Cl.:
*H04L 1/00* *(2006.01)*    *H04J 11/00* *(2006.01)*
*H04B 1/7097* *(2011.01)*    *H04W 52/24* *(2009.01)*

(21) Application number: **16785963.6**

(22) Date of filing: **29.04.2016**

(86) International application number:
**PCT/CN2016/080660**

(87) International publication number:
**WO 2016/173535 (03.11.2016 Gazette 2016/44)**

(54) **INTERFERENCE INFORMATION INDICATING METHOD, AND INTERFERENCE CANCELLING METHOD AND DEVICE**

INTERFERENZINFORMATIONSANZEIGEVERFAHREN UND
INTERFERENZUNTERDRÜCKUNGSVERFAHREN UND -VORRICHTUNG

PROCÉDÉ D'INDICATION D'INFORMATIONS DE BROUILLAGE, ET PROCÉDÉ ET DISPOSITIF
D'ANNULATION DE BROUILLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.04.2015 CN 201510218100**

(43) Date of publication of application:
**07.03.2018 Bulletin 2018/10**

(73) Proprietor: **China Academy of
Telecommunications Technology
Haidian District
Beijing 100191 (CN)**

(72) Inventors:
• **HUANG, Qiuping
  Beijing 100191 (CN)**
• **CHEN, Runhua
  Beijing 100191 (CN)**
• **GAO, Qiubin
  Beijing 100191 (CN)**

(74) Representative: **Nony
11 rue Saint-Georges
75009 Paris (FR)**

(56) References cited:
EP-A1- 2 661 002        WO-A1-2014/121432
WO-A1-2015/044408       WO-A1-2015/044408
WO-A2-2014/182541       CN-A- 104 469 815

• **ERICSSON: "NAICS functionality, robustness,
  and configurability", 3GPP DRAFT; R1-142322,
  3RD GENERATION PARTNERSHIP PROJECT
  (3GPP), MOBILE COMPETENCE CENTRE ; 650,
  ROUTE DES LUCIOLES ; F-06921
  SOPHIA-ANTIPOLIS CEDEX ; FRANCE , vol. RAN
  WG1, no. Seoul, Korea; 20140519 - 20140523 18
  May 2014 (2014-05-18), XP050789439, Retrieved
  from the Internet:
  URL:http://www.3gpp.org/ftp/Meetings_3GPP_
  SYNC/RAN1/RAN1/Docs/ [retrieved on
  2014-05-18]**
• **INTEL CORPORATION: "Discussion on network
  assistance information for enhanced IS/IC
  receivers", 3GPP DRAFT; R4-133543 - NAICS -
  NETWORK ASSISTANCE INFORMATION, 3RD
  GENERATION PARTNERSHIP PROJECT (3GPP),
  MOBILE COMPETENCE CENTRE ; 650, ROUTE
  DES LUCIOLES ; F-06921 SOPHIA-ANTIPOLIS
  CEDEX ; FRANCE , vol. RAN WG4, no. Barcelona,
  Spain; 20130819 - 20130823 13 August 2013
  (2013-08-13), XP050721729, Retrieved from the
  Internet:
  URL:http://www.3gpp.org/ftp/tsg_ran/WG4_Ra
  dio/TSGR4_68/Docs/ [retrieved on 2013-08-13]**

**Description**

This application claims the benefit of Chinese Patent Application No. 201510218100.6, filed with the Chinese Patent Office on April 30, 2015 and entitled "A method and apparatus for indicating interference information, and a method and apparatus for cancelling interference".

Field

The present application relates to the field of communications, and particularly to a method and apparatus for indicating interference information, and a method and apparatus for cancelling interference.

Background

A wireless communication system generally can support a plurality of concurrently operating User Equipments (UEs) which can access a channel in an orthogonal multiplexing mode in the time domain, the frequency domain, the space domain, or the code domain. For example, the plurality of UEs communicate with an eNode B (eNB) at different instances of time in a Time Division Multiplexing (TDM) mode in the time domain; or the plurality of UEs communicate with the eNB using different orthogonal sequences in a Code Division Multiplexing (CDM) mode.

Interference is a predominant limiting factor of the performance of the plurality of UEs in communicating with the eNB, where the interference is mainly categorized into two kinds: intra-cell interference and inter-cell interference.

Inter-cell interference arises from interference of an eNB in an adjacent cell scheduling at the same frequency to another UE in the adjacent cell.

Intra-cell interference mainly arises from Multi-User Multiple-Input Multiple-Output (MU-MIMO) paired UEs. In a cell, an eNB can schedule a plurality of UEs to transmit over the same time and/or frequency resource to thereby pair the UEs. Different beam-forming is applied to different UEs, and a multiple access is implemented by using the UEs at different positions in the space domain. If a beam-forming matrix of one UE is well orthogonal to a channel of another UE, then intra-cell interference may be avoided.

At present, in order to improve the capacity of the communication system, to reduce a delay in the communication system, and to support a larger number of UEs communicating, the Non-Orthogonal Multiple Access (NOMA) technology is being discussed. The NOMA technology can be implemented in a number of ways, e.g., a multiple access in the power domain, where the eNB enables the plurality of UEs to operate in the multiplexing mode in the same time/frequency/space/code dimension, by allocating different power thereto; and a multiple access with pattern segmentation, where different non-orthogonal spreading sequences are allocated to the different UEs so that data of the different UEs are mapped onto the same time/frequency resource. With the NOMA technology, multiple UEs are scheduled to communicate with the eNB over non-orthogonal resources, so that there is intra-cell interference between the UEs, which has to be cancelled between the communicating UEs.

In order to cancel the intra-cell or inter-cell interference, the UEs have to know information about the interference. A part of the information about the interference may not be detected blindly by the UEs, or it may be highly complicated for the UEs to detect blindly a part of the information about the interference, so the information about the interference needs to be indicated by the eNB via signaling.

EP 2 661 002 A1 patent application discloses determining an interference suppression time and frequency zone, and signalling this IS time and frequency zone to the UE so that the UE applies network assisted interference cancellation only in this time and frequency zone. Together with the IS time and frequency zone the base station can send transmission parameter of an interfering base station such as modulation scheme, coding scheme, transmission mode, transmission power, allocated PRBS, etc.

WO2014182541A2 patent application discloses a system to instruct a UE whether it shall operate in normal mode or Network Assisted Interference Cancellation, NAIC, mode, using a dynamic indication or specifying subsets of physical resources, i.e. subframes. The UE may also obtain explicit IS information such as MCS of the interferer, transport block size of the interfering packet, spatial precoder of the interferer, resource block allocation of the interferer, identity of interfering UE, C-RNTI, etc.

The article in the name of the company Ericsson, entitled "NAICS functionality, robustness, and configurability", 3GPP TSG-RAN WG1#77, R1 142322, suggests to use a on/off control command to dynamically instruct the UE to apply or not network assisted interference cancellation.

The article in the name of the company Intel Corporation, entitled "Discussion on network assistance information for enhanced IS/IC receivers", 3GPP TSG-RAN WG4 Meeting #68, R1 133543, discloses signal parameters that have to be transmitted to support network assisted interference cancellation. Some of these parameters are resource block assignment, resource element mapping, MCS, redundancy version scrambling sequence and RNTI. Also, full, partial and no network assistance scenarios are presented.

WO2015044408 A1 patent application discloses methods to cancel interference using network assisted interference cancellation relying on DCI scrambled with an interference radio network temporary identity. The DCI scrambled with intf-RNTI carries transmission information for one interference source, including scheduling information, MCS, PRB, allocation or HARQ version, as well as UE identifier.

Summary

Embodiments of the application provide a method and apparatus for indicating interference information as defined in independent claims 1 and 10 respectively, and a method and apparatus for cancelling interference so as to enable a UE to cancel interference of a received signal according to interference information indicated by the network side as defined in independent claims 6 and 14 respectively. Preferred embodiments are defined in the dependent claims.

An embodiment of the application provides a method for indicating interference information, the method including: determining, by a network device, interference information to be indicated to a User Equipment, UE, wherein interference information which does not include any parameters instructs the UE not to perform any interference cancellation operation, and interference information including parameters indicates to the UE to cancel interference using these parameters; and indicating, by the network device, the interference information to the UE via signaling.

Preferably the indicating the interference information to the UE via signaling includes: indicating the interference information to the UE via dynamic signaling, wherein the dynamic signaling instructs the UE to cancel all, a part, or none of interference in the received signal in all PRBs occupied by the UE according to the interference information; or indicating the interference information to the UE via semi-static signaling.

An embodiment of the application further provides a method for indicating interference information, the method including: obtaining, by a User Equipment, UE, interference information indicated by a network device via signaling; wherein interference information which does not include any parameters instructs the UE not to perform any interference cancellation operation, and interference information including parameters indicates to the UE to cancel interference using these parameters; and cancelling, by the UE, all, a part, or none of the interference in the received signal according to the interference information.

Preferably the obtaining, by the UE, the interference information indicated by the network device via signaling includes: receiving the interference information indicated by the network device via dynamic signaling, wherein the dynamic signaling instructs the UE to cancel all, a part, or none of interference in the received signal in all PRBs occupied by the UE according to the interference information; or receiving the interference information indicated by the network device via semi-static signaling.

An embodiment of the application provides a network device including: a determining unit configured to determine interference information to be indicated to a User Equipment, UE, wherein interference information which does not include any parameters instructs the UE not to perform any interference cancellation operation, and interference information including parameters indicates to the UE to cancel interference using these parameters; and a transmitting unit configured to indicate the interference information to the UE via signaling.

Preferably the transmitting unit is configured to indicate the interference information to the UE via dynamic signaling, wherein the dynamic signaling instructs the UE to cancel all, a part, or none of interference in the received signal in all PRBs occupied by the UE according to the interference information; or to indicate the interference information to the UE via semi-static signaling.

An embodiment of the application provides a User Equipment, UE, including: an obtaining unit configured to obtain interference information indicated by a network device via signaling; wherein interference information which does not include any parameters instructs the UE not to perform any interference cancellation operation, and interference information including parameters indicates to the UE to cancel interference using these parameters; and a processing unit configured to cancel all, a part, or none of the interference in the received signal according to the interference information.

Preferably the obtaining unit is configured to receive the interference information indicated by the network device via dynamic signaling, wherein the dynamic signaling instructs the UE to cancel all, a part, or none of interference in the received signal in all PRBs occupied by the UE according to the interference information; or to receive the interference information indicated by the network device via semi-static signaling.

Preferably the network device includes: a processor, a memory, a transceiver, and a bus interface, wherein the processor, the memory, and the transceiver are connected via the bus interface; the processor is configured to read programs in the memory, and to determine interference information to be indicated to a User Equipment, UE, wherein the interference information instructs the UE to cancel all, a part, or none of interference in a received signal; the transceiver is configured to be controlled by the processor to indicate the interference information to the UE via signaling; and the bus interface is configured to provide an interface, and the processor is responsible for managing a bus architecture, and typical processes.

Preferably the transceiver is configured to be controlled by the processor to indicate the interference information to the UE via dynamic signaling, wherein the dynamic signaling instructs the UE to cancel all, a part, or none of interference in the received signal in all PRBs occupied by the UE according to the interference information; or to be controlled by the processor to indicate the interference information to the UE via semi-static signaling.

Preferably the User Equipment, UE, includes: a processor, a memory, a transceiver, and a bus interface, wherein the processor, the memory, and the transceiver are connected via the bus interface; the transceiver is configured to be controlled by the processor to obtain interference information indicated by a network device via signaling; the processor is configured to read programs in the memory, and to cancel all, a part, or none of interference in a received signal according to the interference information; and the bus interface is configured to provide an interface, and the processor is responsible for managing a bus architecture, and typical processes.

Preferably the transceiver is configured to be controlled by the processor to receive the interference information indicated by the network device via dynamic signaling, wherein the dynamic signaling instructs the UE to cancel all, a part, or none of interference in the received signal in all PRBs occupied by the UE according to the interference information; or to be controlled by the processor to receive the interference information indicated by the network device via semi-static signaling.

In any one of the methods and the apparatuses above, the interference information includes information about an interfering layer or information about an interfering UE.

Preferably the interference information includes one or any combination of following parameters: the number of the interfering layer(s) or the number of the interfering UE(s); an interference cancellation indicator; a spreading sequence applied to an interfering layer or an interfering UE; transmit power applied to an interfering layer or an interfering UE; a modulation and coding scheme applied to an interfering layer or an interfering UE; a coding rate applied to an interfering layer or an interfering UE; a modulation order applied to an interfering layer or an interfering UE; a Physical Resource Block, PRB, index applied to an interfering layer or an interfering UE; and a Radio Network Temporary Identity, RNTI, or a scrambling sequence applied to an interfering layer or an interfering UE.

Preferably the interference information includes the number of the interfering layer(s) or the number of the interfering UE(s); or the interference information indicates the number of the interfering layer(s) or the number of the interfering UE(s) through the number of bits of the interference information; or the interference information includes a bit sequence with a fixed length, and a value of the bit sequence with the fixed length indicates the number of the interfering layer(s) or the number of the interfering UE(s), wherein the number of bits of the bit sequence with the fixed length is at least N, N = $\lceil \log_2(Max) \rceil$, Max represents the maximum value allowable for the number of the interfering layer(s) or the number of the interfering UE(s) of the UE, and $\lceil \bullet \rceil$ represents rounding up.

Preferably the interference information includes an interference cancellation indicator corresponding to each interfering layer or each interfering UE, wherein the interference cancellation indicator corresponding to each interfering layer or each interfering UE indicates whether to cancel interference of the each interfering layer or the each interfering UE; or the interference information includes an interference cancellation indicator indicating an interfering layer or an interfering UE from which interference needs to be cancelled by the UE.

Preferably the interference information includes a spreading sequence applied to each interfering layer or each interfering UE; or the interference information includes an index of the spreading sequence applied to each interfering layer or each interfering UE; or the interference information includes a combination of a spreading sequence applied to an interfering layer or an interfering UE interfering with the received signal of the UE; or the interference information includes a first index indicating an index, of the combination of the spreading sequence applied to the interfering layer or the interfering UE interfering with the received signal of the UE, among all possible combinations.

Preferably the interference information includes transmit power applied to each interfering layer or each interfering UE; or the interference information includes an index of the transmit power applied to each interfering layer or each interfering UE; or the interference information includes a combination sequence of transmit power and a spreading sequence applied to each interfering layer or each interfering UE interfering with the received signal of the UE; or the interference information includes a combination sequence of transmit power and a spreading sequence applied to an interfering layer or an interfering UE interfering with the received signal of the UE; or the interference information includes an index of a combination sequence of transmit power and a spreading sequence applied to each interfering layer or each interfering UE; or the interference information includes a second index indicating an index, of a combination of the transmit power and the spreading sequence applied to the interfering layer or the interfering UE interfering with the received signal of the UE, among all possible combinations.

Preferably the interference information includes a modulation and coding scheme applied to each interfering layer or each interfering UE; or the interference information includes a modulation and coding scheme applied to a first interfering layer or a first interfering UE, and a difference between a modulation and coding scheme applied to a second interfering layer or a second interfering UE, and the modulation and coding scheme applied to the first interfering layer or the first interfering UE; or the interference information includes a difference between a modulation and coding scheme applied to each interfering layer or each interfering UE, and a modulation and coding scheme applied to the UE.

Preferably the interference information includes a coding rate applied to each interfering layer or each interfering UE; or the interference information includes a coding rate applied to a first interfering layer or a first interfering UE, and a difference between a coding rate applied to a second interfering layer or a second interfering UE, and the coding rate applied to the first interfering layer or the first interfering UE; or the interference information includes a difference between a coding rate applied to each interfering layer or each interfering UE, and a coding rate applied to the UE.

Preferably the interference information includes a PRB index applied to each interfering layer or each interfering UE; or the interference information includes a PRB index applied to a first interfering layer or a first interfering UE, and a difference between a PRB index applied to a second interfering layer or a second interfering UE, and the PRB index applied to the first interfering layer or the first interfering UE; or the interference information includes a difference between a PRB index applied to each interfering layer or each interfering UE, and a PRB index applied to the UE.

Preferably the interference information includes a modulation order applied to each interfering layer or each interfering UE; or the interference information includes a modulation order applied to a first interfering layer or a first interfering UE, and a difference between a modulation order applied to a second interfering layer or a second interfering UE, and the modulation order applied to the first interfering layer or the first interfering UE; or the interference information includes a difference between a modulation order applied to each interfering layer or each interfering UE, and a modulation order applied to the UE.

In the embodiments above of the application, the network device transmits the interference information to the UE via signaling so that the UE can cancel all, a part, or none of interference in the received signal according to the interference information. In this process, the network device can obtain the interference information related to the UE, and further transmit the interference information to the UE, so that the UE can cancel interference in the receive signal according to the interference information.

Brief Description of the Drawings

Fig.1 is a schematic flow chart of a method for indicating interference information according to an embodiment of the application;
Fig.2 is a schematic flow chart of a method for indicating interference information according to an embodiment of the application;
Fig.3 is a schematic structural diagram of an eNB according to an embodiment of the application;
Fig.4 is a schematic structural diagram of a user equipment according to an embodiment of the application;
Fig.5 is a schematic structural diagram of another eNB according to an embodiment of the application; and
Fig.6 is a schematic structural diagram of another user equipment according to an embodiment of the application.

Detailed Description of the Embodiments

In order to make the objects, technical solutions, and advantages of the application more apparent, the application will be described below in further details with reference to the drawings, and apparently the embodiments described below are only a part but not all of the embodiments of the application. Based upon the embodiments here of the application, all the other embodiments which can occur to those ordinarily skilled in the art without any inventive effort shall fall into the scope of the application.

The embodiments of the application can be applicable to a Long Term Evolution (LTE) system or a Long Term Evolution-Advanced (LTE-A) system, or another system in which interference needs to be cancelled. In the prior art, intra-cell interference can be avoided in an MU-MIMO scenario using the orthogonal multiple access technology, but in order to improve the capacity of the communication system, and reduce the delay, the non-orthogonal multiple access technology may become a new technological trend. With the non-orthogonal multiple access technology, different non-orthogonal spreading sequences may be allocated to different UEs so that data of the different UEs are mapped onto the same time/frequency resource, thus resulting in intra-cell interference between the UEs. For example, there are three UEs in the system, each of which transmits a data symbol, where these three data symbols can be mapped onto two orthogonal time/frequency resources as follows:

$$\begin{bmatrix} y_1 \\ y_2 \end{bmatrix} = \begin{bmatrix} 1*h_1 & 1*h_1 & 0 \\ 1*h_2 & 0 & 1*h_2 \end{bmatrix} \begin{bmatrix} p_1 & 0 & 0 \\ 0 & p_2 & 0 \\ 0 & 0 & p_3 \end{bmatrix} \begin{bmatrix} x_1 \\ x_2 \\ x_3 \end{bmatrix} \quad \dots\dots\dots\dots\dots\dots\dots\dots\dots\dots (1)$$

Where $\begin{bmatrix} y_1 \\ y_2 \end{bmatrix}$ represents data received over the two orthogonal time/frequency resources, $h_1$ and $h_2$ represent channels between an eNB to the two orthogonal time/frequency resources respectively, $p_k$ represents transmit power of the k-th UE, the value of k is 1, 2, or 3, $x_k$ represents a data symbol of the k-th UE, and the matrix of spreading

sequences $\begin{bmatrix} 1 & 1 & 0 \\ 1 & 0 & 1 \end{bmatrix}$ is applied to the three UEs. Since the spreading sequences applied to the three UEs are non-orthogonal, there will be intra-cell interference to each UE, which needs to be cancelled.

The embodiments of the application provide a solution to indicating interference information, and a solution to cancelling interference based upon the solution to indicating interference information so as to enable a UE to cancel all, a part, or none of interference in a received signal according to interference information indicated by a network device.

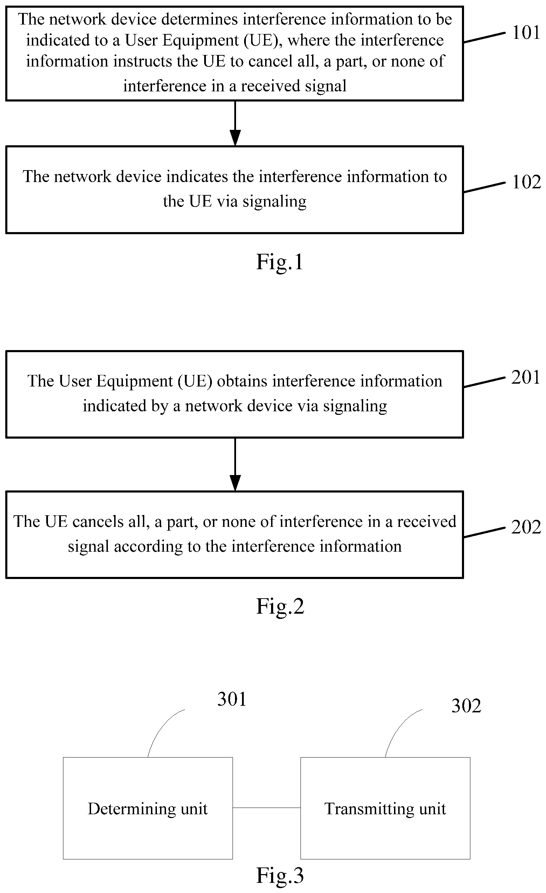

As illustrated in Fig.1 which is a schematic flow chart of a method for indicating interference information according to an embodiment of the application. The flow is performed at the network side, for example, it can be performed by an eNB, or a network device functioning as an eNB.

As illustrated in Fig.1, the flow of the method includes the following operations.

In the operation 101, the network device determines interference information to be indicated to a User Equipment (UE), where the interference information instructs the UE to cancel all, a part, or none of interference in a received signal.

In the operation 101, downlink transmission of the network device includes downlink data or Downlink Control Information (DCI). The downlink data are information bits carrying a message to be transmitted to the UE. In order to enable the UE to decode the received downlink data successfully, characteristics of the downlink data also need to be transmitted to the corresponding UE so that the UE can detect/demodulate the received downlink data. The characteristics of the downlink data include but will not be limited to a modulation order, a resource allocation, MIMO parameters, etc., all of which are referred to as downlink control information. In a typical wireless communication system, an eNB transmits only downlink control information about downlink data of a UE to the UE, and there is no need for a UE to detect/decode downlink control information of another UE in the same or different cell. However, a UE to cancel/suppress interference using a sophisticated receiver needs to obtain interference information about interference so as to cancel the interference.

In the operation 102, the network device indicates the interference information to the UE via signaling.

As illustrated in Fig.2 which is a schematic flow chart of a method for cancelling interference according to an embodiment of the application. The flow is performed at the user equipment side, for example, it can be performed by a mobile phone, or a user equipment functioning as a mobile phone. As illustrated in Fig.2, the flow can include the following operations.

In the operation 201, the User Equipment (UE) obtains interference information indicated by a network device via signaling.

In this operation, the UE can obtain the interference information indicated by the network device via dynamic signaling, or can obtain the interference information indicated by the network device via semi-static signaling, although the embodiment of the application will not be limited thereto.

In the operation 202, the UE cancels all, a part, or none of interference in a received signal according to the interference information.

In the respective embodiments of the application (e.g., the operation 101 or the operation 201 above), it is supposed that each UE transmits data in a single stream, and each UE is allocated a spreading sequence with the length of K, in the embodiments of the application without any loss of generality. It shall be noted that those skilled in the art can readily extend the methods according to the embodiments of the application to a scenario where each UE receives data in a plurality of streams, so a repeated description thereof will be omitted in the embodiments of the application. A data symbol of each UE is spread using its corresponding spreading sequence with the length of K, and then mapped onto K orthogonal time-frequency resources. For example, if there are M UEs in total operating in a multiplexing mode, then a frequency multiplexing ratio may be up to M/K and at this time, there may be interference to each UE from the other (M-1) UEs.

The different UEs may operate to or not to cancel interference, dependent upon their different channel states. For example, there are two UEs including a remote UE allocated higher power, and a near-end UE allocated lower power. The strength of a signal of the remote UE is higher than that of intra-cell interference received by the remote UE, so it may not cancel the interference; and the strength of intra-cell interference received by the near-end UE is higher than that of a signal thereof, so it will cancel the interference. Accordingly in order to enable the UE to cancel interference according to different conditions, the interference information determined by the network device shall instruct the UE to cancel all, a part, or none of interference in a received signal. Generally the interference information includes information about an interfering layer, or information about an interfering UE, and the interference information includes one or any combination of the following parameters.

The number of the interfering layer(s) or the number of the interfering UE(s).

An interference cancellation indicator.

A spreading sequence applied to an interfering layer or an interfering UE, where the number of the spreading sequence(s) of each interfering layer or each interfering UE may be one or more, and if there is one spreading sequence, then the spreading sequence may be a spreading sequence corresponding to the interfering layer or the interfering UE in all the Physical Resource Block (PRB) pairs; and if there are a plurality of spreading sequences, then each spreading sequence may correspond to one or one group of PRB pairs of the interfering layer or the interfering UE.

Transmit power applied to an interfering layer or an interfering UE, where the number of the transmit power of each interfering layer or each interfering UE may be one or more, and if there is one transmit power, then the transmit power may be transmit power corresponding to the interfering layer or the interfering UE in all the PRB pairs; and if there are a plurality of transmit power, then each transmit power may correspond to one or one group of PRB pairs of the interfering layer or the interfering UE.

A Modulation and Coding Scheme (MCS) applied to an interfering layer or an interfering UE, where the number of the MCS(s) of each interfering layer or each interfering UE may be one or more, and if there is one MCS, then the MCS may be an MCS corresponding to the interfering layer or the interfering UE in all the PRB pairs; and if there are a plurality of MCSs, then each MCS may correspond to one or one group of PRB pairs of the interfering layer or the interfering UE.

A coding rate applied to an interfering layer or an interfering UE, where the number of the coding rate(s) of each interfering layer or each interfering UE may be one or more, and if there is one coding rate, then the coding rate may be a coding rate corresponding to the interfering layer or the interfering UE in all the PRB pairs; and if there are a plurality of coding rates, then each coding rate may correspond to one or one group of PRB pairs of the interfering layer or the interfering UE.

A modulation order applied to an interfering layer or an interfering UE, where the number of the modulation order(s) of each interfering layer or each interfering UE may be one or more, and if there is one modulation order, then the modulation order may be a modulation order corresponding to the interfering layer or the interfering UE in all the PRB pairs; and if there are a plurality of modulation orders, then each modulation order may correspond to one or one group of PRB pairs of the interfering layer or the interfering UE.

A PRB index applied to an interfering layer or an interfering UE, where the number of the PRB index(es) of each interfering layer or each interfering UE may be one or more, and if there is one PRB index, then the PRB index may be a PRB index corresponding to the interfering layer or the interfering UE in a full-bandwidth; and if there are a plurality of PRB indexes, then each PRB index may correspond to one sub-band.

A Radio Network Temporary Identity (RNTI) or a scrambling sequence applied to an interfering layer or an interfering UE, where the number of the scrambling sequence(s) of each interfering layer or each interfering UE may be one or more, and if there is one scrambling sequence, then the scrambling sequence may be a scrambling sequence corresponding to the interfering layer or the interfering UE in all the PRB pairs; and if there are a plurality of scrambling sequences, then each scrambling sequence may correspond to one or one group of PRB pairs of the interfering layer or the interfering UE.

The following description will be given respectively of how the interference information indicates the parameters above.

The interference information indicates the number of the interfering layer(s) or the number of the interfering UE(s).

The network device may indicate directly to the UE the interfering layer(s) or the interfering UE(s) from which interference needs to be cancelled, and then transmit, for the interference of each interfering layer or each interfering UE, interference information corresponding to the interfering layer or the interfering UE.

The network device can transmit the number of the interfering layer(s) or the number of the interfering UE(s) directly to the UE, where the interference information includes the number of the interfering layer(s) or the number of the interfering UE(s).

The network device can alternatively indicate the number of the interfering layer(s) or the number of the interfering UE(s) through the number of bits of the interference information instead of transmitting the number of the interfering layer(s) or the number of the interfering UE(s) directly to the UE, and the UE can determine the number of the interfering layer(s) or the number of the interfering UE(s) from which interference needs to be cancelled, through the number of bits of the interference information upon reception of the interference information. For example, the network device can set an overhead (i.e., the number of bits) of the interference information in DCI that is not constant but dependent upon the number of the interfering layer(s) or the number of the interfering UE(s) (for example, the interference information for interference of two layers needs to be indicated using an overhead twice that for interference of one layer). If the number of the interfering layer(s) or the number of the interfering UE(s) is larger, then there will be a higher overhead of the interference information in the signaling, and at this time, the UE can determine the number of the interfering layer(s) or the number of the interfering UE(s) according to the number of bits of the interference information. Since the number of the interfering layer(s) or the number of the interfering UE(s) from which interference needs to be cancelled by the UE is not constant, the overhead of the interference information in the DCI will not be constant, that is, the number of bits of the interference information in the DCI will not be constant but dependent upon the number of the interfering layer(s) or the number of the interfering UE(s), and in this case, the size of the DCI will be varying, so the UE cannot know the size of the DCI, but has to detect some possible sizes of the DCI blindly, thus greatly increasing the complexity of the UE while receiving.

The number of the interfering layer(s) or the number of the interfering UE(s) can alternatively be indicated by a value of a bit sequence with a fixed length, where the number of bits of the bit sequence with the fixed length is at least N, $N = \lceil \log_2(Max) \rceil$, Max represents the maximum value allowable for the number of the interfering layer(s) or the number of the interfering UE(s) of the UE, or the maximum value of the number of the interfering layer(s) or the number of the interfering UE(s) allowable by a UE with the highest capacity in the network, and $\lceil \bullet \rceil$ represents rounding up. For example, the network device can fix an overhead occupied by interference information signaling. For example, the highest interference information signaling overhead is defined for the maximum value Max allowable for the number of the interfering layer(s) or the number of the interfering UE(s) of the UE, or the maximum value Max of the number of the interfering layer(s) or the number of the interfering UE(s) allowable by a UE with the highest capacity in the network. If the real number of the interfering layer(s) is less than Max, then unused bits will be reserved. In this case, there is a fixed size of the format of the DCI, so the complexity of the UE in blind detection will not be increased. Max can be specified in the standard or configured semi-statically over the network. At this time, a parameter for transmitting the number of the interfering layer(s) (e.g., M-I) can be transmitted in $N = \lceil \log_2(Max) \rceil$ bits, where the value of the N bits represents the number of the interfering layer(s) or the number of the interfering UE(s) of the UE.

The interference information indicates an interference cancellation indicator.

Different UEs may operate to or not to cancel interference. For example, there are two UEs including a remote UE allocated higher power, and a near-end UE allocated lower power. The strength of a signal of the remote UE is higher than that of intra-cell interference received by the remote UE, so the remote UE may not cancel the interference, and may handle the intra-cell interference as noise using a traditional receiver; and the strength of intra-cell interference received by the near-end UE is higher than that of a signal thereof, so the near-end UE will cancel the interference, and may first demodulate and cancel the interference of the remote UE, and then demodulate its own signal. Accordingly in order to schedule the UEs over a time-frequency resource, the network device needs to schedule the different UEs to use different receivers so that the UEs cancel some interference, and ignore some interference. Furthermore there may be interference to a UE from a plurality of interfering layers or interfering UEs, so the network device needs to be capable of indicating to the UE the interfering layer(s) or the interfering UE(s) from which interference needs to be cancelled, and the interfering layer(s) or the interfering UE(s) from which interference does not need to be cancelled. To this end, the interference cancellation indicator can be embodied in a number of implementations.

In a possible implementation, the interference information can include an interference cancellation indicator corresponding to each interfering layer or each interfering UE (i.e. the interference cancellation indicator of each interfering layer or each interfering UE), where the interference cancellation indicator corresponding to each interfering layer or each interfering UE indicates whether to cancel interference of the each interfering layer or the each interfering UE. At this time, one interference cancellation indicator corresponds to one interfering layer or one interfering UE, and the UE may receive a plurality of interference cancellation indicators, where the UE can determine according to each interference cancellation indicator whether to cancel interference of the interfering layer or the interfering UE corresponding to the each interference cancellation indicator, upon reception of the interference cancellation indicators.

In another possible implementation, the interference information includes an interference cancellation indicator indicating an interfering layer or an interfering UE from which interference needs to be cancelled by the UE. The interference cancellation indicator may be a bit sequence, and a bit in the interference cancellation indicator corresponds to interference of an interfering layer or an interfering UE, and indicates whether to cancel interference of the interfering layer or the interfering UE. For example, if the value of the bit is 1, then it will instruct the UE to cancel interference of the interfering layer or the interfering UE corresponding to the bit, and if the value of the bit is 0, then it will instruct the UE not to cancel interference of the interfering layer or the interfering UE corresponding to the bit. In this way, the network device is highly capable of controlling the operation of the UE to thereby avoid the function from being degraded due to a mismatch between the scheduling network device and the operating UE. At this time, the network device may not indicate the number of the interfering layer(s) or the number of the interfering UE(s) through any interference information, but will only indicate to the UE using a fixed bit sequence whether to cancel interference of the interfering layer(s) or the interfering UE(s), where the number of bits in the fixed bit sequence is at least $\lceil \log_2(Max) \rceil$, and Max represents the maximum value allowable for the number of the interfering layer(s) or the number of the interfering UE(s) of the UE. If the real number of the interfering layer(s) or the real number of the interfering UE(s) is less than Max, then unused bits will be reserved. Max can be preconfigured or configured semi-statically over the network, by the network device dependent upon a real condition.

The interference information indicates a spreading sequence of an interfering layer or an interfering UE.

The network device can indicate through the interference information a spreading sequence applied to each interfering layer or each interfering UE (i.e. the spreading sequence of each interfering layer or each interfering UE) separately, or spreading sequences applied to a plurality of interfering layers or interfering UEs jointly, although the embodiment of the application will not be limited thereto.

The network device can indicate the spreading sequence applied to each interfering layer or each interfering UE directly through the interference information or the interference information can include a combination of a spreading sequence applied to an interfering layer or an interfering UE interfering with the received signal of the UE (i.e. a combination of the spreading sequence(s) of the interfering layer(s) or the interfering UE(s) interfering with the received signal of the UE). At this time, there is a high overhead of the interference information. In view of this, the interference information can alternatively include an index of the spreading sequence applied to each interfering layer or each interfering UE, so the UE can determine the spreading sequence corresponding to the index of the spreading sequence applied to each interfering layer or each interfering UE according to the index of the spreading sequence applied to the each interfering layer or the each interfering UE.

Optionally the interference information can alternatively include a first index indicating an index, of the combination of the spreading sequence(s) applied to the interfering layer(s) or the interfering UE(s) interfering with the received signal of the UE, among all the possible combinations. For example, if a spreading sequence applied to the UE is [1 1], then the combination of the spreading sequence(s) applied to the interfering layer(s) or the interfering UE(s) interfering with the received signal of the UE may be one of:

$$\left\{ \begin{bmatrix} 1 \\ 0 \end{bmatrix}, \begin{bmatrix} 0 \\ 1 \end{bmatrix}, \begin{bmatrix} 1 & 0 \\ 0 & 1 \end{bmatrix} \right\}.$$

Where $\begin{bmatrix} 1 \\ 0 \end{bmatrix}$ or $\begin{bmatrix} 0 \\ 1 \end{bmatrix}$ represents a spreading sequence applied to an interfering layer or an interfering UE,

and $\begin{bmatrix} 1 & 0 \\ 0 & 1 \end{bmatrix}$ represents spreading sequences applied to two interfering layers or interfering UEs, so that the interference information can indicate the spreading sequence(s) applied to the interfering layer(s) or the interfering UE(s) interfering with the received signal of the UE using only two bits.

The interference information indicates transmit power of an interfering layer or an interfering UE.

The network device can indicate through the interference information transmit power applied to each interfering layer or each interfering UE (i.e. the transmit power of each interfering layer or each interfering UE) separately, or transmit power applied to a plurality of interfering layers or interfering UEs jointly, although the embodiment of the application will not be limited thereto. It shall also be noted that if the transmit power and the spreading sequence(s) are indicated jointly, then the spreading sequence(s) may not be transmitted separately.

In a first possible implementation, the interference information can include the transmit power applied to each interfering layer or each interfering UE to thereby indicate directly the transmit power applied to each interfering layer or each interfering UE.

In a second possible implementation, the interference information can include a combination of transmit power and a spreading sequence applied to an interfering layer or an interfering UE interfering with the received signal of the UE (i.e. a combination of the transmit power and the spreading sequence(s), of the interfering layer(s) or the interfering UE(s) interfering with the received signal of the UE).

In a third possible implementation, the interference information can include an index of transmit power applied to each interfering layer or each interfering UE (i.e. the index of the transmit power of each interfering layer or each interfering UE), so the UE can determine the transmit power corresponding to the index of the transmit power applied to each interfering layer or each interfering UE according to the index of the transmit power applied to each interfering layer or each interfering UE.

In a fourth possible implementation, the interference information can include a combination sequence of transmit power and a spreading sequence applied to each interfering layer or each interfering UE interfering with the received signal of the UE (i.e. the combination sequence of the transmit power and the spreading sequence, of each interfering layer or each interfering UE interfering with the received signal of the UE).

In a fifth possible implementation, the interference information can include an index of a combination sequence of transmit power and a spreading sequence applied to each interfering layer or each interfering UE (i.e. the combination sequence of the transmit power and the spreading sequence, of each interfering layer or each interfering UE), so the UE can determine the combination sequence of the transmit power and the spreading sequence applied to each interfering layer or each interfering UE according to the index of the combination sequence of the transmit power and the spreading sequence applied to the each interfering layer or the each interfering UE.

In a sixth possible implementation, the interference information can indicate both the transmit power and the spreading sequence(s) applied to the interfering layer(s) or the interfering UE(s) (i.e. the transmit power and the spreading sequence(s), of the interfering layer(s) or the interfering UE(s)), and at this time, the interference information includes a second index indicating an index, of the combination of the transmit power and the spreading sequence(s) applied to the interfering layer(s) or the interfering UE(s) interfering with the received signal of the UE, among all the possible combinations.

The interference information indicates a modulation and coding scheme applied to an interfering layer or an interfering UE.

The network device can indicate through the interference information a modulation and coding scheme applied to each interfering layer or each interfering UE (i.e. the modulation and coding scheme of each interfering layer or each interfering UE) separately, or modulation and coding schemes applied to a plurality of interfering layers or interfering UEs jointly, although the embodiment of the application will not be limited thereto.

In a possible implementation, the interference information includes the modulation and coding scheme applied to each interfering layer or each interfering UE to thereby indicate directly the modulation and coding scheme applied to each interfering layer or each interfering UE.

In another possible implementation, the interference information includes a modulation and coding scheme applied to a first interfering layer or a first interfering UE, and a difference between a modulation and coding scheme applied to a second interfering layer or a second interfering UE, and the modulation and coding scheme applied to the first interfering layer or the first interfering UE. The second interfering layer or the second interfering UE is a different interfering layer or a different interfering UE from the first interfering layer or the first interfering UE; or the interference information includes a difference between a modulation and coding scheme applied to each interfering layer or each interfering UE, and a modulation and coding scheme applied to the UE.

The interference information indicates a coding rate applied to an interfering layer or an interfering UE.

The network device can indicate through the interference information a coding rate applied to each interfering layer or each interfering UE (i.e. the coding rate of each interfering layer or each interfering UE) separately, or coding rates applied to a plurality of interfering layers or interfering UEs jointly, although the embodiment of the application will not be limited thereto.

In a possible implementation, the interference information includes the coding rate applied to each interfering layer or each interfering UE to thereby indicate directly the coding rates applied to each interfering layer or each interfering UE.

In another possible implementation, the interference information includes a coding rate applied to a first interfering layer or a first interfering UE, and a difference between a coding rate applied to a second interfering layer or a second interfering UE, and the coding rate applied to the first interfering layer or the first interfering UE. The second interfering layer or the second interfering UE is a different interfering layer or a different interfering UE from the first interfering layer or the first interfering UE. For example, the interference information includes A and $\Delta A$, where A represents the coding rate applied to the first interfering layer or the first interfering UE, and $\Delta A$ represents the difference between the coding rate applied to the second interfering layer or the second interfering UE, and the coding rate applied to the first interfering layer or the first interfering UE; and the UE can determine that the coding rate applied to the first interfering layer or the first interfering UE is A, and the coding rate applied to the second interfering layer or the second interfering UE is $A+\Delta A$, upon reception of the interference information. Since the difference between the coding rate applied to the second interfering layer or the second interfering UE, and the coding rate applied to the first interfering layer or the first interfering UE is typically encoded in a small number of bits than the number of bits in which the coding rate applied to the second interfering layer or the second interfering UE is encoded, the number of bits in which the interference information is encoded can be reduced to thereby reduce the amount of data to be transmitted, and lower an overhead of network resources in this implementation.

Alternatively the interference information includes a difference between a coding rate applied to each interfering layer or each interfering UE, and a coding rate applied to the UE.

The interference information indicates a modulation order applied to an interfering layer or an interfering UE.

The network device can indicate through the interference information a modulation order applied to each interfering layer or each interfering UE (i.e. the modulation order of each interfering layer or each interfering UE) separately, or modulation orders applied to a plurality of interfering layers or interfering UEs jointly, although the embodiment of the application will not be limited thereto.

In a possible implementation, the interference information includes the modulation order applied to each interfering layer or each interfering UE to thereby indicate directly the modulation order applied to each interfering layer or each interfering UE.

In another possible implementation, the interference information includes a modulation order applied to a first interfering layer or a first interfering UE, and a difference between a modulation order applied to a second interfering layer or a second interfering UE, and the modulation order applied to the first interfering layer or the first interfering UE. The second interfering layer or the second interfering UE is a different interfering layer or a different interfering UE from the first interfering layer or the first interfering UE. For example, the interference information includes B and ΔB, where B represents the modulation order applied to the first interfering layer or the first interfering UE, and ΔB represents the difference between the modulation order applied to the second interfering layer or the second interfering UE, and the modulation order applied to the first interfering layer or the first interfering UE; and the UE can determine that the modulation order applied to the first interfering layer or the first interfering UE is B, and the modulation order applied to the second interfering layer or the second interfering UE is B+ΔB, upon reception of the interference information. Since the difference between the modulation order applied to the second interfering layer or the second interfering UE, and the modulation order applied to the first interfering layer or the first interfering UE is typically encoded in a small number of bits than the number of bits in which the modulation order applied to the second interfering layer or the second interfering UE is encoded, the number of bits in which the interference information is encoded can be reduced to thereby reduce the amount of data to be transmitted, and lower an overhead of network resources in this implementation.

Alternatively the interference information includes a difference between a modulation order applied to each interfering layer or each interfering UE, and a modulation order applied to the UE.

The interference information indicates a PRB index applied to an interfering layer or an interfering UE.

The network device can indicate through the interference information a PRB index applied to each interfering layer or each interfering UE (i.e. the PRB index of each interfering layer or each interfering UE) separately, or PRB indexes applied to a plurality of interfering layers or interfering UEs jointly, although the embodiment of the application will not be limited thereto.

In a possible implementation, the interference information includes the PRB index applied to each interfering layer or each interfering UE to thereby indicate directly the PRB index applied to each interfering layer or each interfering UE.

In another possible implementation, the interference information includes a PRB index applied to a first interfering layer or a first interfering UE, and a difference between a PRB index applied to a second interfering layer or a second interfering UE, and the PRB index applied to the first interfering layer or the first interfering UE. The second interfering layer or the second interfering UE is a different interfering layer or a different interfering UE from the first interfering layer or the first interfering UE. For example, the interference information includes C and ΔC, where C represents the PRB index applied to the first interfering layer or the first interfering UE, and ΔC represents the difference between the PRB index applied to the second interfering layer or the second interfering UE, and the PRB index applied to the first interfering layer or the first interfering UE; and the UE can determine that the PRB index applied to the first interfering layer or the first interfering UE is C, and the PRB index applied to the second interfering layer or the second interfering UE is C+ΔC, upon reception of the interference information. Since the difference between the PRB index applied to the second interfering layer or the second interfering UE, and the PRB index applied to the first interfering layer or the first interfering UE is typically encoded in a small number of bits than the number of bits in which the PRB index applied to the second interfering layer or the second interfering UE is encoded, the number of bits in which the interference information is encoded can be reduced to thereby reduce the amount of data to be transmitted, and lower an overhead of network resources in this implementation.

Alternatively the interference information includes a difference between a PRB index applied to each interfering layer or each interfering UE, and a PRB index applied to the UE.

The interference information indicates a radio network temporary identity or a scrambling sequence applied to an interfering layer or an interfering UE.

The network device can indicate through the interference information a radio network temporary identity or a scrambling sequence applied to each interfering layer or each interfering UE (i.e. the radio network temporary identity or the scrambling sequence of each interfering layer or each interfering UE) separately, or radio network temporary identities or scrambling sequences applied to a plurality of interfering layers or interfering UEs jointly, although the embodiment of the application will not be limited thereto.

It shall be noted that after the network device indicates the RNTI(s) or the scrambling sequence(s) applied to the interfering layer(s) or the interfering UE(s), and their resource occupancy information through the interference information, the UE may decode an interfering Physical Downlink Control Channel (PDCCH) for other interference information, so no interfering modulation order, modulation and coding scheme, or coding rate will be indicated. Whether the network device needs to indicate the RNTI(s) applied to the interfering layer(s) or the interfering UE(s) may also be dependent upon processing by the receiver of the UE.

In the operation 102, the network device can indicate the interference information to the UE via dynamic signaling, or can indicate the interference information to the UE via semi-static signaling.

In the embodiment of the application, the interference information is indicated via semi-static signaling in such a way that the signaling of the network device to the UE varies at a long interval of time, for example, the signaling is transmitted once at an interval of tens or hundreds of sub-frames, where the network device transmits a new interference information indicator at a low frequency adapted to the characteristic of the semi-static signaling, for example, the network device transmits interference information to the UE once every tens or hundreds of sub-frames. In the LTE system, a possible semi-static indication scheme is a Radio Resource Control (RRC) signaling scheme.

If the interference information is indicated via semi-static signaling, then the interference information indicated by the network device to the UE will not vary frequently, and the UE, the interfering layers, or the interfering UEs will be scheduled together over a long period of time until the system is reconfigured next time. A benefit thereof is no additional load of dynamic signaling but at the cost of an increase in restriction and complexity of scheduling.

In the embodiment of the application, the dynamic signaling refers to signaling which can be transmitted dynamically. The interference information is indicated via dynamic signaling in such a way that the signaling for the network device to transmit the interference information to the UE is transmitted dynamically, for example, the signaling can be transmitted in each sub-frame so that the UE suppresses interference of a signal of a paired UE using the indicated interference information in the current scheduling period, and in the LTE system, such dynamic signaling is typically transmitted over a PDCCH or an Enhanced Physical Downlink Control Channel (EPDCCH).

If the interference information is indicated via dynamic signaling, then the interference information provided by the network device to the UE may vary rapidly, e.g., at a sub-frame level, and at this time, the UE can be scheduled jointly with a different interfering layer or a different interfering UE in each sub-frame, thus improving the flexibility of the network device in scheduling but at the cost of an additional high load of the interference information in the DCI.

The network device can transmit the interference information via dynamic signaling, semi-static signaling, or a combination thereof. For example, a part of the received parameters of the interference information are transmitted via dynamic signaling, and the remaining parameters of the parameters of the interference information are transmitted via semi-static signaling. In a possible hybrid scheme, the parameters of the interference information received by some specific receiver are provided with a set of configurations thereof via higher-layer signaling, and transmitted semi-statically. The UE detects a subset of the configurations blindly for real parameters of the interference information. This scheme can lower a signaling load of the parameters of the interference information in the DCI. Taking a number 16 of configuration possibilities of the parameters of the interference information as example, if a subset of 4 possible configurations is configured for the parameters of the interference information via semi-static signaling, then there will be only two bits instead of four bits in the DCI.

The network device can indicate the interference information to the UE by transmitting the interference information separately from or jointly with downlink control information related to downlink data of the UE, although the embodiment of the application will not be limited thereto.

The network device can determine the interference information to be indicated to the UE, according to an interference cancellation capability of the UE. If a receiver of the UE is a receiver incapable of cancelling interference, e.g., a Minimum Mean Square Error (MMSE) receiver, where the UE is incapable of cancelling interference, then the network device will not indicate any interference information; and if the receiver of the UE is a receiver capable of cancelling interference, e.g., a Successive Interference Cancellation (SIC) receiver, where the UE is capable of cancelling interference, then the network device will instruct the UE via signaling to cancel all, a part, or none of interference in the received signal.

According to the invention, if the receiver of the UE is capable of cancelling interference, then the network device may instruct the UE not to perform any interference cancellation operation, using interference information which does not include any parameters, and at this time, after the UE receives the interference information which does not include any parameters, the interference cancellation function of the receiver capable of cancelling interference, of the UE is disabled due to the absence of parameters. Alternatively if the interference information indicated by the network device includes the parameters, then the interference cancellation indicator in the interference information will indicate to the UE whether to cancel interference using these parameters. For example, the network device schedules two UEs jointly, i.e., UE1 and UE2, and a receiver of the UE1 is capable of cancelling interference, and may be an SIC receiver; and a receiver of the UE2 is incapable of cancelling interference, and may be an MMSE receiver. At this time, the network device can indicate interference information only to the UE1 via signaling.

In another example, the network device schedules three UEs jointly, i.e., UE1, UE2, and UE3, and all the receivers of the UE1, the UE2, and the UE3 are capable of cancelling interference, and may be SIC receivers; and the UE1 needs to cancel interference from the UE2 using the receiver, but does not need to cancel interference from the UE3 using the receiver. At this time, the network device can indicate the interference information to the UE1 via the signaling, where the interference information can indicate parameters related to the UE2 and the UE3, and also the interference information instructs the UE1 to cancel only interference of the UE2.

The network device can transmit the interference information via signaling at a PRB level or a broadband level. The signaling at the PRB level refers to corresponding signaling transmitted to each PRB occupied by the UE, where the signaling corresponding to the different PRBs may indicate different interference information to the UE. For example, the UE1 is paired with the UE2 in the PRB1, and with the UE3 in the PRB2, and since the parameters corresponding to the UE2 may be different from those corresponding to the UE3, the interference information indicated to the UE1 in the PRB1 may be different from the interference information indicated to the UE1 in the RPB2.

The signaling at the broadband level refers to the same interference information indicated in all the PRBs occupied by the UE. If the network device indicates the interference information to the UE via dynamic signaling at the PRB level, then there will be an unacceptable increase in DCI overhead of the dynamic signaling. Accordingly in a possible implementation, if the interference information is indicated to the UE via dynamic signaling, then the dynamic signaling will instruct the UE to cancel all, a part, or none of interference in the received signal in all the Physical Resource Blocks (PRBs) occupied by the UE according to the interference information.

For the flow of the method above, an embodiment of the application further provides an eNB, and reference can be made to the implementation of the method for details of the eNB, so a repeated description thereof will be omitted here.

As illustrated in Fig.3 which is a schematic structural diagram of an eNB according to an embodiment of the application, the eNB includes: a determining unit 301 is configured to determine interference information to be indicated to a User Equipment (UE), where the interference information instructs the UE to cancel all, a part, or none of interference in a received signal; and a transmitting unit 302 is configured to indicate the interference information to the UE via signaling.

Preferably the interference information includes information about an interfering layer or information about an interfering UE.

Preferably the interference information includes one or any combination of the following parameters: the number of the interfering layer(s) or the number of the interfering UE(s); an interference cancellation indicator; a spreading sequence applied to an interfering layer or an interfering UE; transmit power applied to an interfering layer or an interfering UE; a modulation and coding scheme applied to an interfering layer or an interfering UE; a coding rate applied to an interfering layer or an interfering UE; a modulation order applied to an interfering layer or an interfering UE; a PRB index applied to an interfering layer or an interfering UE; and a Radio Network Temporary Identity (RNTI) or a scrambling sequence applied to an interfering layer or an interfering UE.

Preferably the interference information includes the number of the interfering layer(s) or the number of the interfering UE(s); or the interference information indicates the number of the interfering layer(s) or the number of the interfering UE(s) through the number of bits of the interference information; or the number of the interfering layer(s) or the number of the interfering UE(s) is indicated by a value of a bit sequence with a fixed length, where the number of bits of the bit sequence with the fixed length is at least N, $N = \lceil \log_2(Max) \rceil$, Max represents the maximum value allowable for the number of the interfering layer(s) or the number of the interfering UE(s) of the UE, and $\lceil \bullet \rceil$ represents rounding up.

Preferably the interference information includes an interference cancellation indicator corresponding to each interfering layer or each interfering UE, where the interference cancellation indicator corresponding to each interfering layer or each interfering UE indicates whether to cancel interference of the each interfering layer or the each interfering UE; or the interference information includes an interference cancellation indicator indicating an interfering layer or an interfering UE from which interference needs to be cancelled by the UE.

Preferably the interference information includes a spreading sequence applied to each interfering layer or each interfering UE; or the interference information includes an index of the spreading sequence applied to each interfering layer or each interfering UE; or the interference information includes a combination sequence of a spreading sequence applied to an interfering layer or an interfering UE interfering with the received signal of the UE; or the interference information includes a first index indicating an index, of a combination of the spreading sequence applied to the interfering layer or the interfering UE interfering with the received signal of the UE, among all the possible combinations.

Preferably the interference information includes transmit power applied to each interfering layer or each interfering UE; or the interference information includes an index of the transmit power applied to each interfering layer or each interfering UE; or the interference information includes a combination sequence of transmit power and a spreading sequence applied to each interfering layer or each interfering UE interfering with the received signal of the UE; or the interference information includes a combination sequence of transmit power and a spreading sequence applied to an interfering layer or an interfering UE interfering with the received signal of the UE; or the interference information includes an index of a combination sequence of transmit power and a spreading sequence applied to each interfering layer or each interfering UE; or the interference information includes a second index indicating an index, of a combination of the transmit power and the spreading sequence applied to the interfering layer or the interfering UE interfering with the received signal of the UE, among all the possible combinations.

Preferably the interference information includes a modulation and coding scheme applied to each interfering layer or each interfering UE; or the interference information includes a modulation and coding scheme applied to a first interfering layer or a first interfering UE, and a difference between a modulation and coding scheme applied to a second interfering layer or a second interfering UE, and the modulation and coding scheme applied to the first interfering layer or the first interfering UE; or the interference information includes a difference between a modulation and coding scheme applied to each interfering layer or each interfering UE, and a modulation and coding scheme applied to the UE.

Preferably the interference information includes a coding rate applied to each interfering layer or each interfering UE; or the interference information includes a coding rate applied to a first interfering layer or a first interfering UE, and a difference between a coding rate applied to a second interfering layer or a second interfering UE, and the coding rate applied to the first interfering layer or the first interfering UE; or the interference information includes a difference between a coding rate applied to each interfering layer or each interfering UE, and a coding rate applied to the UE.

Preferably the interference information includes a PRB index applied to each interfering layer or each interfering UE; or the interference information includes a PRB index applied to a first interfering layer or a first interfering UE, and a difference between a PRB index applied to a second interfering layer or a second interfering UE, and the PRB index applied to the first interfering layer or the first interfering UE; or the interference information includes a difference between a PRB index applied to each interfering layer or each interfering UE, and a PRB index applied to the UE.

Preferably the interference information includes a modulation order applied to each interfering layer or each interfering UE; or the interference information includes a modulation order applied to a first interfering layer or a first interfering UE, and a difference between a modulation order applied to a second interfering layer or a second interfering UE, and the modulation order applied to the first interfering layer or the first interfering UE; or the interference information includes a difference between a modulation order applied to each interfering layer or each interfering UE, and a modulation order applied to the UE.

Preferably the transmitting unit 302 is configured to transmit the interference information to the UE via dynamic signaling, wherein the dynamic signaling instructs the UE to cancel all, a part, or none of interference in the received signal in all the PRBs occupied by the UE according to the interference information; or to transmit the interference information to the UE via semi-static signaling.

Based upon the same technical idea, an embodiment of the application further provides a user equipment.

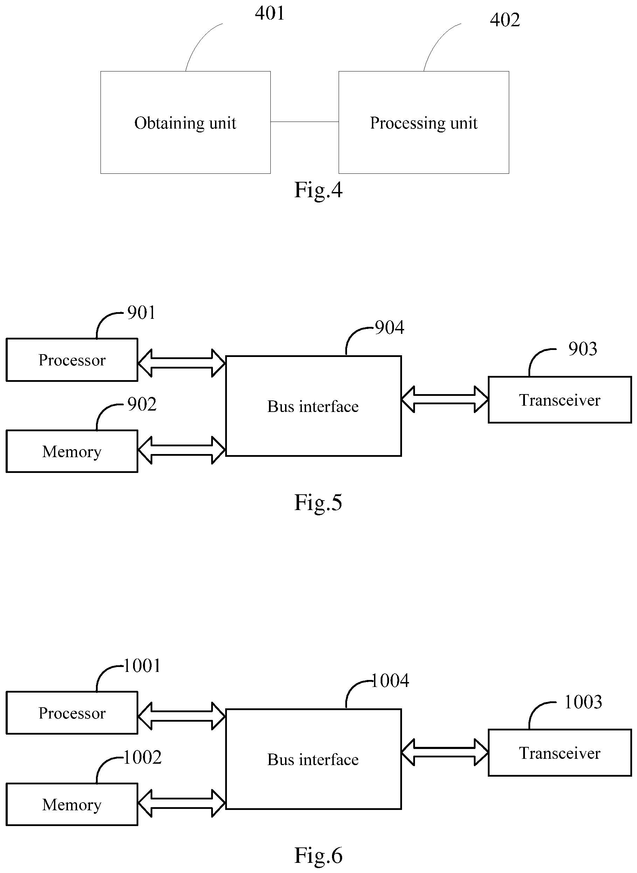

As illustrated in Fig.4 which is a schematic structural diagram of a user equipment according to an embodiment of the application, the user equipment includes: an obtaining unit 401 is configured to obtain interference information indicated by a network device via signaling; and a processing unit 402 is configured to cancel all, a part, or none of interference in a received signal according to the interference information.

Preferably the interference information includes information about an interfering layer or information about an interfering UE.

Preferably the interference information includes one or any combination of the following parameters: the number of the interfering layer(s) or the number of the interfering UE(s); an interference cancellation indicator; a spreading sequence applied to an interfering layer or an interfering UE; transmit power applied to an interfering layer or an interfering UE; a modulation and coding scheme applied to an interfering layer or an interfering UE; a coding rate applied to an interfering layer or an interfering UE; a modulation order applied to an interfering layer or an interfering UE; a PRB index applied to an interfering layer or an interfering UE; and a Radio Network Temporary Identity (RNTI) or a scrambling sequence applied to an interfering layer or an interfering UE.

Preferably the interference information includes the number of the interfering layer(s) or the number of the interfering UE(s); or the interference information indicates the number of the interfering layer(s) or the number of the interfering UE(s) through the number of bits of the interference information; or the number of the interfering layer(s) or the number of the interfering UE(s) is indicated by a value of a bit sequence with a fixed length, where the number of bits of the bit sequence with the fixed length is at least N, $N = \lceil \log_2(\text{Max}) \rceil$, Max represents the maximum value allowable for the number of the interfering layer(s) or the number of the interfering UE(s) of the UE, and $\lceil \bullet \rceil$ represents rounding up.

Preferably the interference information includes an interference cancellation indicator corresponding to each interfering layer or each interfering UE, where the interference cancellation indicator corresponding to each interfering layer or each interfering UE indicates whether to cancel interference of the each interfering layer or the each interfering UE; or the interference information includes an interference cancellation indicator indicating an interfering layer or an interfering UE from which interference needs to be cancelled by the UE.

Preferably the interference information includes a spreading sequence applied to each interfering layer or each interfering UE; or the interference information includes an index of the spreading sequence applied to each interfering layer or each interfering UE; or the interference information includes a combination sequence of a spreading sequence applied to an interfering layer or an interfering UE interfering with the received signal of the UE; or the interference information includes a first index indicating an index, of a combination of the spreading sequence applied to the interfering layer or the interfering UE interfering with the received signal of the UE, among all the possible combinations.

Preferably the interference information includes transmit power applied to each interfering layer or each interfering UE; or the interference information includes an index of the transmit power applied to each interfering layer or each interfering UE; or the interference information includes a combination sequence of transmit power and a spreading sequence applied to each interfering layer or each interfering UE interfering with the received signal of the UE; or the interference information includes a combination sequence of transmit power and a spreading sequence applied to an interfering layer or an interfering UE interfering with the received signal of the UE; or the interference information includes an index of a combination sequence of transmit power and a spreading sequence applied to each interfering layer or each interfering UE; or the interference information includes a second index indicating an index, of a combination of the transmit power and the spreading sequence applied to the interfering layer or the interfering UE interfering with the received signal of the UE, among all the possible combinations.

Preferably the interference information includes a modulation and coding scheme applied to each interfering layer or each interfering UE; or the interference information includes a modulation and coding scheme applied to a first interfering layer or a first interfering UE, and a difference between a modulation and coding scheme applied to a second interfering layer or a second interfering UE, and the modulation and coding scheme applied to the first interfering layer or the first interfering UE; or the interference information includes a difference between a modulation and coding scheme applied to each interfering layer or each interfering UE, and a modulation and coding scheme applied to the UE.

Preferably the interference information includes a coding rate applied to each interfering layer or each interfering; or the interference information includes a coding rate applied to a first interfering layer or a first interfering UE, and a difference between a coding rate applied to a second interfering layer or a second interfering UE, and the coding rate applied to the first interfering layer or the first interfering UE; or the interference information includes a difference between a coding rate applied to each interfering layer or each interfering UE, and a coding rate applied to the UE.

Preferably the interference information includes a PRB index applied to each interfering layer or each interfering UE; or the interference information includes a PRB index applied to a first interfering layer or a first interfering UE, and a difference between a PRB index applied to a second interfering layer or a second interfering UE, and the PRB index applied to the first interfering layer or the first interfering UE; or the interference information includes a difference between a PRB index applied to each interfering layer or each interfering UE, and a PRB index applied to the UE.

Preferably the interference information includes a modulation order applied to each interfering layer or each interfering UE; or the interference information includes a modulation order applied to a first interfering layer or a first interfering UE, and a difference between a modulation order applied to a second interfering layer or a second interfering UE, and the modulation order applied to the first interfering layer or the first interfering UE; or the interference information includes a difference between a modulation order applied to each interfering layer or each interfering UE, and a modulation order applied to the UE.

Preferably the obtaining unit 401 is configured to receive the interference information indicated by the network device via dynamic signaling, wherein the dynamic signaling instructs the UE to cancel all, a part, or none of interference in the received signal in all PRBs occupied by the UE according to the interference information; or to receive the interference information indicated by the network device via semi-static signaling.

Based upon the same technical idea, an embodiment of the application further provides an eNB.

Referring to Fig.5, an eNB according to an embodiment of the application includes a processor 901, a memory 902, a transceiver 903, and a bus interface 904, where the processor 901, the memory 902, and the transceiver 903 are connected via the bus interface 904.

The processor 901 is configured to read programs in the memory 902, and to determine interference information to be indicated to a User Equipment (UE), where the interference information instructs the UE to cancel all, a part, or none of interference in a received signal.

The transceiver 903 is configured to be controlled by the processor 901 to indicate the interference information to the UE via signaling.

The bus interface 904 is configured to provide an interface, and the processor is responsible for managing a bus architecture, and typical processes.

Preferably the interference information includes information about an interfering layer or information about an interfering UE.

Preferably the interference information includes one or any combination of the following parameters: the number of the interfering layer(s) or the number of the interfering UE(s); an interference cancellation indicator; a spreading sequence applied to an interfering layer or an interfering UE; transmit power applied to an interfering layer or an interfering UE; a modulation and coding scheme applied to an interfering layer or an interfering UE; a coding rate applied to an interfering layer or an interfering UE; a modulation order applied to an interfering layer or an interfering UE; a PRB index applied to an interfering layer or an interfering UE; and a Radio Network Temporary Identity (RNTI) or a scrambling sequence applied to an interfering layer or an interfering UE.

Preferably the interference information includes the number of the interfering layer(s) or the number of the interfering UE(s); or the interference information indicates the number of the interfering layer(s) or the number of the interfering UE(s) through the number of bits of the interference information; or the number of the interfering layer(s) or the number of the interfering UE(s) is indicated by a value of a bit sequence with a fixed length, where the number of bits of the bit sequence with the fixed length is at least N, $N = \lceil \log_2(Max) \rceil$, Max represents the maximum value allowable for the number of the interfering layer(s) or the number of the interfering UE(s) of the UE, and $\lceil \bullet \rceil$ represents rounding up.

Preferably the interference information includes an interference cancellation indicator corresponding to each interfering layer or each interfering UE, where the interference cancellation indicator corresponding to the each interfering layer or the each interfering UE indicates whether to cancel interference of the each interfering layer or the each interfering UE; or the interference information includes an interference cancellation indicator indicating an interfering layer or an interfering UE from which interference needs to be cancelled by the UE.

Preferably the interference information includes a spreading sequence applied to each interfering layer or each interfering UE; or the interference information includes an index of the spreading sequence applied to each interfering layer or each interfering UE; or the interference information includes a combination sequence of a spreading sequence applied to an interfering layer or an interfering UE interfering with the received signal of the UE; or the interference information includes a first index indicating an index, of a combination of the spreading sequence applied to the interfering layer or the interfering UE interfering with the received signal of the UE, among all the possible combinations.

Preferably the interference information includes transmit power applied to each interfering layer or each interfering UE; or the interference information includes an index of the transmit power applied to each interfering layer or each interfering UE; or the interference information includes a combination sequence of transmit power and a spreading sequence applied to each interfering layer or each interfering UE interfering with the received signal of the UE; or the interference information includes a combination sequence of transmit power and a spreading sequence applied to an interfering layer or an interfering UE interfering with the received signal of the UE; or the interference information includes an index of a combination sequence of transmit power and a spreading sequence applied to each interfering layer or each interfering UE; or the interference information includes a second index indicating an index, of a combination of the transmit power and the spreading sequence applied to the interfering layer or the interfering UE interfering with the received signal of the UE, among all the possible combinations.

Preferably the interference information includes a modulation and coding scheme applied to each interfering layer or each interfering UE; or the interference information includes a modulation and coding scheme applied to a first interfering layer or a first interfering UE, and a difference between a modulation and coding scheme applied to a second interfering layer or a second interfering UE, and the modulation and coding scheme applied to the first interfering layer or the first interfering UE; or the interference information includes a difference between a modulation and coding scheme applied to each interfering layer or each interfering UE, and a modulation and coding scheme applied to the UE.

Preferably the interference information includes a coding rate applied to each interfering layer or each interfering UE; or the interference information includes a coding rate applied to a first interfering layer or a first interfering UE, and a difference between a coding rate applied to a second interfering layer or a second interfering UE, and the coding rate applied to the first interfering layer or the first interfering UE; or the interference information includes a difference between a coding rate applied to each interfering layer or each interfering UE, and a coding rate applied to the UE.

Preferably the interference information includes a PRB index applied to each interfering layer or each interfering UE; or the interference information includes a PRB index applied to a first interfering layer or a first interfering UE, and a difference between a PRB index applied to a second interfering layer or a second interfering UE, and the PRB index applied to the first interfering layer or the first interfering UE; or the interference information includes a difference between a PRB index applied to each interfering layer or each interfering UE, and a PRB index applied to the UE.

Preferably the interference information includes a modulation order applied to each interfering layer or each interfering UE; or the interference information includes a modulation order applied to a first interfering layer or a first interfering UE, and a difference between a modulation order applied to a second interfering layer or a second interfering UE, and the modulation order applied to the first interfering layer or the first interfering UE; or the interference information includes a difference between a modulation order applied to each interfering layer or each interfering UE, and a modulation order applied to the UE.

Preferably the processor 901 is configured to transmit the interference information to the UE via dynamic signaling, wherein the dynamic signaling instructs the UE to cancel all, a part, or none of interference in the received signal in all the PRBs occupied by the UE according to the interference information; or to transmit the interference information to the UE via semi-static signaling.

As illustrated in Fig.5, the bus architecture can include any number of interconnecting buses and bridges to particularly link together various circuits including one or more processors represented by the processor 901, and one or more memories represented by the memory 902. The bus architecture can further link together various other circuits, e.g., peripheral devices, manostats, power management circuits, etc., all of which are well known in the art, so a further description thereof will be omitted in this context. The bus interface serves as an interface. The transceiver 903 can be a number of elements including a transmitter and a receiver which are units for communication with various other devices over a transmission medium. The user interface 904 can also be an interface via which external or internal devices can be connected as appropriate, where the connected devices include but will not be limited to a keypad, a display, a speaker, a microphone, a joystick, etc.

Based upon the same inventive idea as the method, an embodiment of the application further provides a user equipment.

As illustrated in Fig.6, an embodiment of the application provides a User Equipment (UE) including: a processor 1001, a memory 1002, a transceiver 1003, and a bus interface 1004, where the processor 1001, the memory 1002, and the transceiver 1003 are connected via the bus interface 1004.

The transceiver 1003 is configured to be controlled by the processor 1001 to obtain interference information indicated by a network device via signaling.

The processor 1001 is configured to read programs in the memory 1002, and to cancel all, a part, or none of interference in a received signal according to the interference information.

The bus interface 1004 is configured to provide an interface, and the processor 1001 is responsible for managing a bus architecture, and typical processes.

Preferably the interference information includes information about an interfering layer or information about an interfering UE.

Preferably the interference information includes one or any combination of the following parameters: the number of the interfering layer(s) or the number of the interfering UE(s); an interference cancellation indicator; a spreading sequence applied to an interfering layer or an interfering UE; transmit power applied to an interfering layer or an interfering UE; a modulation and coding scheme applied to an interfering layer or an interfering UE; a coding rate applied to an interfering layer or an interfering UE; a modulation order applied to an interfering layer or an interfering UE; a PRB index applied to an interfering layer or an interfering UE; and a Radio Network Temporary Identity (RNTI) or a scrambling sequence applied to an interfering layer or an interfering UE.

Preferably the interference information includes the number of the interfering layer(s) or the number of the interfering UE(s); or the interference information indicates the number of the interfering layer(s) or the number of the interfering UE(s) through the number of bits of the interference information; or the number of the interfering layer(s) or the number of the interfering UE(s) is indicated by a value of a bit sequence with a fixed length, where the number of bits of the bit sequence with the fixed length is at least N, $N = \lceil \log_2(Max) \rceil$, Max represents the maximum value allowable for the number of the interfering layer(s) or the number of the interfering UE(s) of the UE, and $\lceil \bullet \rceil$ represents rounding up.

Preferably the interference information includes an interference cancellation indicator corresponding to each interfering layer or each interfering UE, where the interference cancellation indicator corresponding to the each interfering layer or the each interfering UE indicates whether to cancel interference of the each interfering layer or the each interfering UE; or the interference information includes an interference cancellation indicator indicating an interfering layer or an interfering UE from which interference needs to be cancelled by the UE.

Preferably the interference information includes a spreading sequence applied to each interfering layer or each interfering UE; or the interference information includes an index of the spreading sequence applied to each interfering layer or each interfering UE; or the interference information includes a combination sequence of a spreading sequence applied to an interfering layer or an interfering UE interfering with the received signal of the UE; or the interference information includes a first index indicating an index, of a combination of the spreading sequence applied to the interfering layer or the interfering UE interfering with the received signal of the UE, among all the possible combinations.

Preferably the interference information includes transmit power applied to each interfering layer or each interfering UE; or the interference information includes an index of the transmit power applied to each interfering layer or each interfering UE; or the interference information includes a combination sequence of transmit power and a spreading sequence applied to each interfering layer or each interfering UE interfering with the received signal of the UE; or the interference information includes a combination sequence of transmit power and a spreading sequence applied to an interfering layer or an interfering UE interfering with the received signal of the UE; or the interference information includes an index of a combination sequence of transmit power and a spreading sequence applied to each interfering layer or interfering UE; or the interference information includes a second index indicating an index, of a combination of the transmit power and the spreading sequence applied to the interfering layer or the interfering UE interfering with the received signal of the UE, among all the possible combinations.

Preferably the interference information includes a modulation and coding scheme applied to each interfering layer or each interfering UE; or the interference information includes a modulation and coding scheme applied to a first interfering layer or a first interfering UE, and a difference between a modulation and coding scheme applied to a second interfering layer or a second interfering UE, and the modulation and coding scheme applied to the first interfering layer or the first interfering UE; or the interference information includes a difference between a modulation and coding scheme applied to each interfering layer or each interfering UE, and a modulation and coding scheme applied to the UE.

Preferably the interference information includes a coding rate applied to each interfering layer or each interfering; or the interference information includes a coding rate applied to a first interfering layer or a first interfering UE, and a difference between a coding rate applied to a second interfering layer or a second interfering UE, and the coding rate applied to the first interfering layer or the first interfering UE; or the interference information includes a difference between a coding rate applied to each interfering layer or each interfering UE, and a coding rate applied to the UE.

Preferably the interference information includes a PRB index applied to each interfering layer or each interfering UE; or the interference information includes a PRB index applied to a first interfering layer or a first interfering UE, and a difference between a PRB index applied to a second interfering layer or a second interfering UE, and the PRB index applied to the first interfering layer or the first interfering UE; or the interference information includes a difference between a PRB index applied to each interfering layer or each interfering UE, and a PRB index applied to the UE.

Preferably the interference information includes a modulation order applied to each interfering layer or each interfering UE; or the interference information includes a modulation order applied to a first interfering layer or a first interfering UE, and a difference between a modulation order applied to a second interfering layer or a second interfering UE, and the modulation order applied to the first interfering layer or the first interfering UE; or the interference information includes a difference between a modulation order applied to each interfering layer or each interfering UE, and a modulation order applied to the UE.

Preferably the processor 1001 is configured to receive the interference information indicated by the network device via dynamic signaling, wherein the dynamic signaling instructs the UE to cancel all, a part, or none of interference in the received signal in all PRBs occupied by the UE according to the interference information; or to receive the interference information indicated by the network device via semi-static signaling.

As illustrated in Fig.6, the bus architecture can include any number of interconnecting buses and bridges to particularly link together various circuits including one or more processors represented by the processor 1001, and one or more memories represented by the memory 1002. The bus architecture can further link together various other circuits, e.g., peripheral devices, manostats, power management circuits, etc., all of which are well known in the art, so a further description thereof will be omitted in this context. The bus interface serves as an interface. The transceiver 1003 can be a number of elements including a transmitter and a receiver which are units for communication with various other devices over a transmission medium. The user interface 1004 can also be an interface via which external or internal devices can be connected as appropriate, where the connected devices include but will not be limited to a keypad, a display, a speaker, a microphone, a joystick, etc.

In summary, in the embodiments above of the application, the network device transmits the interference information to the UE so that the UE can cancel all, a part, or none of interference in the received signal according to the interference information to thereby realize communications. In this process, the network device can obtain the interference information related to the UE, and further transmit the interference information to the UE, so that the UE can cancel interference in the receive signal according to the interference information.

The application has been described in a flow chart and/or a block diagram of the method, the device (system) and the computer program product according to the embodiments of the application. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational operations are performed on the computer or the other programmable data processing device to create a computer implemented process so that the instructions executed on the computer or the other programmable device provide operations for performing the functions specified in the flow(s) of the flow chart and/or the block(s) of the block diagram.

Although the preferred embodiments of the application have been described, those skilled in the art benefiting from the underlying inventive concept can make additional modifications and variations to these embodiments. Therefore the appended claims are intended to be construed as encompassing the preferred embodiments and all the modifications and variations coming into the scope of the application.

Evidently those skilled in the art can make various modifications and variations to the application without departing from the scope of the application. Thus the application is also intended to encompass these modifications and variations thereto so long as the modifications and variations come into the scope of the claims appended to the application.

**Claims**

1. A method for indicating interference, **characterized in that**, the method comprises:

    determining (101), by a network device, interference information to be indicated to a User Equipment, UE, wherein interference information which does not include any parameters instructs the UE not to perform any interference cancellation operation, and interference information including parameters indicates to the UE to cancel interference using these parameters; and
indicating (102), by the network device, the interference information to the UE via signaling.

2. The method according to claim 1, wherein the interference information comprises information about an interfering layer or information about an interfering UE.

3. The method according to claim 2, wherein the interference information comprises one or any combination of the following parameters:

a number of the interfering layer or a number of the interfering UE;
an interference cancellation indicator;
a spreading sequence applied to the interfering layer or the interfering UE;
transmit power applied to the interfering layer or the interfering UE;
a modulation and coding scheme applied to the interfering layer or the interfering UE;
a coding rate applied to the interfering layer or the interfering UE;
a modulation order applied to the interfering layer or the interfering UE;
a Physical Resource Block, PRB, index applied to the interfering layer or the interfering UE; or
a Radio Network Temporary Identity, RNTI, or a scrambling sequence applied to the interfering layer or the interfering UE.

4. The method according to claim 3, wherein:

information about the interference cancellation indicator comprises an interference cancellation indicator corresponding to each interfering layer or each interfering UE, wherein the interference cancellation indicator corresponding to each interfering layer or each interfering UE indicates whether to cancel interference of the each interfering layer or the each interfering UE; or comprises an interference cancellation indicator indicating the interfering layer or the interfering UE from which interference needs to be cancelled by the UE; and/or,
information about the spreading sequence applied to the interfering layer or the interfering UE comprises a spreading sequence applied to each interfering layer or each interfering UE; or an index of the spreading sequence applied to each interfering layer or each interfering UE; or a combination of a spreading sequence applied to an interfering layer or an interfering UE interfering with a received signal of the UE; or a first index indicating an index, of the combination of the spreading sequence applied to the interfering layer or the interfering UE interfering with the received signal of the UE, among all possible combinations; and/or,
information about transmit power applied to the interfering layer or the interfering UE comprises transmit power applied to each interfering layer or each interfering UE; or an index of the transmit power applied to each interfering layer or each interfering UE; or a combination sequence of transmit power and a spreading sequence applied to each interfering layer or each interfering UE interfering with the received signal of the UE; or a combination sequence of transmit power and a spreading sequence applied to an interfering layer or an interfering UE interfering with the received signal of the UE; or an index of a combination sequence of transmit power and a spreading sequence applied to each interfering layer or each interfering UE; or a second index indicating an index, of a combination of the transmit power and the spreading sequence applied to the interfering layer or the interfering UE interfering with the received signal of the UE, among all possible combinations; and/or,
information about the modulation and coding scheme applied to the interfering layer or the interfering UE comprises a modulation and coding scheme applied to each interfering layer or each interfering UE; or a modulation and coding scheme applied to a first interfering layer or a first interfering UE, and a difference between a modulation and coding scheme applied to a second interfering layer or a second interfering UE, and the modulation and coding scheme applied to the first interfering layer or the first interfering UE; or a difference between a modulation and coding scheme applied to each interfering layer or each interfering UE, and a modulation and coding scheme applied to the UE; and/or,
information about the coding rate applied to the interfering layer or the interfering UE comprises a coding rate applied to each interfering layer or each interfering UE; or a coding rate applied to a first interfering layer or a first interfering UE, and a difference between a coding rate applied to a second interfering layer or a second interfering UE, and the coding rate applied to the first interfering layer or the first interfering UE; or a difference between a coding rate applied to each interfering layer or each interfering UE, and a coding rate applied to the UE; and/or,
information about the PRB index applied to the interfering layer or the interfering UE comprises a PRB index applied to each interfering layer or each interfering UE; or a PRB index applied to a first interfering layer or a first interfering UE, and a difference between a PRB index applied to a second interfering layer or a second interfering UE, and the PRB index applied to the first interfering layer or the first interfering UE; or a difference between a PRB index applied to each interfering layer or each interfering UE, and a PRB index applied to the UE; and/or,

information about the modulation order applied to the interfering layer or the interfering UE comprises a modulation order applied to each interfering layer or each interfering UE; or a modulation order applied to a first interfering layer or a first interfering UE, and a difference between a modulation order applied to a second interfering layer or a second interfering UE, and the modulation order applied to the first interfering layer or the first interfering UE; or a difference between a modulation order applied to each interfering layer or each interfering UE, and a modulation order applied to the UE.

5.  The method according to any one of claims 1 to 4, wherein the indicating the interference information to the UE via signaling comprises:

    indicating the interference information to the UE via dynamic signaling, wherein the dynamic signaling instructs the UE to cancel all, a part, or none of interference in the received signal in all PRBs occupied by the UE according to the interference information; or
    indicating the interference information to the UE via semi-static signaling.

6.  A method for cancelling interference, **characterized in that**, the method comprises:

    obtaining (201), by a User Equipment, UE, interference information indicated by a network device via signaling; wherein interference information which does not include any parameters instructs the UE not to perform any interference cancellation operation, and interference information including parameters indicates to the UE to cancel interference using these parameters; and
    cancelling (202), by the UE, all, a part, or none of the interference in the received signal according to the interference information.

7.  The method according to claim 6, wherein the interference information comprises information about an interfering layer or information about an interfering UE.

8.  The method according to claim 7, wherein the interference information comprises one or any combination of the following parameters:

    a number of the interfering layer or a number of the interfering UE;
    an interference cancellation indicator;
    a spreading sequence applied to the interfering layer or the interfering UE;
    transmit power applied to the interfering layer or the interfering UE;
    a modulation and coding scheme applied to the interfering layer or the interfering UE;
    a coding rate applied to the interfering layer or the interfering UE;
    a modulation order applied to the interfering layer or the interfering UE;
    a Physical Resource Block, PRB, index applied to the interfering layer or the interfering UE; or
    a Radio Network Temporary Identity, RNTI, or a scrambling sequence applied to the interfering layer or the interfering UE.

9.  The method according to claim 8, wherein:

    information about the interference cancellation indicator comprises an interference cancellation indicator corresponding to each interfering layer or each interfering UE, wherein the interference cancellation indicator corresponding to each interfering layer or each interfering UE indicates whether to cancel interference of the each interfering layer or the each interfering UE; or comprises an interference cancellation indicator indicating the interfering layer or the interfering UE from which interference needs to be cancelled by the UE; and/or,
    information about the spreading sequence applied to the interfering layer or the interfering UE comprises a spreading sequence applied to each interfering layer or each interfering UE; or an index of the spreading sequence applied to each interfering layer or each interfering UE; or a combination of a spreading sequence applied to an interfering layer or an interfering UE interfering with a received signal of the UE; or a first index indicating an index, of the combination of the spreading sequence applied to the interfering layer or the interfering UE interfering with the received signal of the UE, among all possible combinations; and/or,
    information about transmit power applied to the interfering layer or the interfering UE comprises transmit power applied to each interfering layer or each interfering UE; or an index of the transmit power applied to each interfering layer or each interfering UE; or a combination sequence of transmit power and a spreading sequence applied to each interfering layer or each interfering UE interfering with the received signal of the UE; or a combination sequence of transmit power and a spreading sequence applied to an interfering layer or an interfering UE interfering with the received signal of the UE; or an index of a combination sequence of transmit power and a spreading sequence applied to each interfering layer or each interfering UE; or a second index indicating an index, of a combination of the transmit power and the spreading sequence applied to the interfering layer or the interfering UE interfering with the received signal of the UE, among all possible combination; and/or,

information about the modulation and coding scheme applied to the interfering layer or the interfering UE comprises a modulation and coding scheme applied to each interfering layer or each interfering UE; or a modulation and coding scheme applied to a first interfering layer or a first interfering UE, and a difference between a modulation and coding scheme applied to a second interfering layer or a second interfering UE, and the modulation and coding scheme applied to the first interfering layer or the first interfering UE; or a difference between a modulation and coding scheme applied to each interfering layer or each interfering UE, and a modulation and coding scheme applied to the UE; and/or,

information about the coding rate applied to the interfering layer or the interfering UE comprises a coding rate applied to each interfering layer or each interfering UE; or a coding rate applied to a first interfering layer or a first interfering UE, and a difference between a coding rate applied to a second interfering layer or a second interfering UE, and the coding rate applied to the first interfering layer or the first interfering UE; or a difference between a coding rate applied to each interfering layer or each interfering UE, and a coding rate applied to the UE; and/or,

information about the PRB index applied to the interfering layer or the interfering UE comprises a PRB index applied to each interfering layer or each interfering UE; or a PRB index applied to a first interfering layer or a first interfering UE, and a difference between a PRB index applied to a second interfering layer or a second interfering UE, and the PRB index applied to the first interfering layer or the first interfering UE; or a difference between a PRB index applied to each interfering layer or each interfering UE, and a PRB index applied to the UE; and/or,

information about the modulation order applied to the interfering layer or the interfering UE comprises a modulation order applied to each interfering layer or each interfering UE; or a modulation order applied to a first interfering layer or a first interfering UE, and a difference between a modulation order applied to a second interfering layer or a second interfering UE, and the modulation order applied to the first interfering layer or the first interfering UE; or a difference between a modulation order applied to each interfering layer or each interfering UE, and a modulation order applied to the UE.

10. A network device, **characterized in that**, the network device comprises:

a determining unit (301) configured to determine interference information to be indicated to a User Equipment, UE, wherein interference information which does not include any parameters instructs the UE not to perform any interference cancellation operation, and interference information including parameters indicates to the UE to cancel interference using these parameters; and
a transmitting unit (302) configured to indicate the interference information to the UE via signaling.

11. The network device according to claim 10, wherein the interference information comprises information about an interfering layer or information about an interfering UE.

12. The network device according to claim 11, wherein the interference information comprises one or any combination of the following parameters:

a number of the interfering layer or a number of the interfering UE;
an interference cancellation indicator;
a spreading sequence applied to the interfering layer or the interfering UE;
transmit power applied to the interfering layer or the interfering UE;
a modulation and coding scheme applied to the interfering layer or the interfering UE;
a coding rate applied to the interfering layer or the interfering UE;
a modulation order applied to the interfering layer or the interfering UE;
a Physical Resource Block, PRB, index applied to the interfering layer or the interfering UE; or
a Radio Network Temporary Identity, RNTI, or a scrambling sequence applied to the interfering layer or the interfering UE.

13. The network device according to claim 12, wherein:

information about the interference cancellation indicator comprises an interference cancellation indicator corresponding to each interfering layer or each interfering UE, wherein the interference cancellation indicator corresponding to each interfering layer or each interfering UE indicates whether to cancel interference of the each interfering layer or the each interfering UE; or comprises an interference cancellation indicator indicating the interfering layer or the interfering UE from which interference needs to be cancelled by the UE; and/or,

information about the spreading sequence applied to the interfering layer or the interfering UE comprises a spreading sequence applied to each interfering layer or each interfering UE; or an index of the spreading sequence applied to each interfering layer or each interfering UE; or a combination of a spreading sequence applied to an interfering layer or an interfering UE interfering with a received signal of the UE; or a first index indicating an index, of the combination of the spreading sequence applied to the interfering layer or the interfering UE interfering with the received signal of the UE, among all possible combinations; and/or,

information about transmit power applied to the interfering layer or the interfering UE comprises transmit power applied to each interfering layer or each interfering UE; or an index of the transmit power applied to each interfering layer or each interfering UE; or a combination sequence of transmit power and a spreading sequence applied to each interfering layer or each interfering UE interfering with the received signal of the UE; or a combination sequence of transmit power and a spreading sequence applied to an interfering layer or an interfering UE interfering with the received signal of the UE; or an index of a combination sequence of transmit power and a spreading sequence applied to each interfering layer or each interfering UE; or a second index indicating an index, of a combination of the transmit power and the spreading sequence applied to the interfering layer or the interfering UE interfering with the received signal of the UE, among all possible combination; and/or,

information about the modulation and coding scheme applied to the interfering layer or the interfering UE comprises a modulation and coding scheme applied to each interfering layer or each interfering UE; or a modulation and coding scheme applied to a first interfering layer or a first interfering UE, and a difference between a modulation and coding scheme applied to a second interfering layer or a second interfering UE, and the modulation and coding scheme applied to the first interfering layer or the first interfering UE; or a difference between a modulation and coding scheme applied to each interfering layer or each interfering UE, and a modulation and coding scheme applied to the UE; and/or,

information about the coding rate applied to the interfering layer or the interfering UE comprises a coding rate applied to each interfering layer or each interfering UE; or a coding rate applied to a first interfering layer or a first interfering UE, and a difference between a coding rate applied to a second interfering layer or a second interfering UE, and the coding rate applied to the first interfering layer or the first interfering UE; or a difference between a coding rate applied to each interfering layer or each interfering UE, and a coding rate applied to the UE; and/or,

information about the PRB index applied to the interfering layer or the interfering UE comprises a PRB index applied to each interfering layer or each interfering UE; or a PRB index applied to a first interfering layer or a first interfering UE, and a difference between a PRB index applied to a second interfering layer or a second interfering UE, and the PRB index applied to the first interfering layer or the first interfering UE; or a difference between a PRB index applied to each interfering layer or each interfering UE, and a PRB index applied to the UE; and/or,

information about the modulation order applied to the interfering layer or the interfering UE comprises a modulation order applied to each interfering layer or each interfering UE; or a modulation order applied to a first interfering layer or a first interfering UE, and a difference between a modulation order applied to a second interfering layer or a second interfering UE, and the modulation order applied to the first interfering layer or the first interfering UE; or a difference between a modulation order applied to each interfering layer or each interfering UE, and a modulation order applied to the UE.

14. A User Equipment, UE, **characterized in that**, the UE comprises:

an obtaining unit (401) configured to obtain interference information indicated by a network device via signaling; wherein interference information which does not include any parameters instructs the UE not to perform any interference cancellation operation, and interference information including parameters indicates to the UE to cancel interference using these parameters; and

a processing unit (402) configured to cancel all, a part, or none of the interference in the received signal according to the interference information.

15. The UE according to claim 14, wherein the interference information comprises information about an interfering layer

or information about an interfering UE.

16. The UE according to claim 15, wherein the interference information comprises one or any combination of the following parameters:

a number of the interfering layer or a number of the interfering UE;
an interference cancellation indicator;
a spreading sequence applied to the interfering layer or the interfering UE;
transmit power applied to the interfering layer or the interfering UE;
a modulation and coding scheme applied to the interfering layer or the interfering UE;
a coding rate applied to the interfering layer or the interfering UE;
a modulation order applied to the interfering layer or the interfering UE;
a Physical Resource Block, PRB, index applied to the interfering layer or the interfering UE; or
a Radio Network Temporary Identity, RNTI, or a scrambling sequence applied to the interfering layer or the interfering UE.

17. The UE according to claim 16, wherein:

information about the interference cancellation indicator comprises an interference cancellation indicator corresponding to each interfering layer or each interfering UE, wherein the interference cancellation indicator corresponding to each interfering layer or each interfering UE indicates whether to cancel interference of the each interfering layer or the each interfering UE; or comprises an interference cancellation indicator indicating the interfering layer or the interfering UE from which interference needs to be cancelled by the UE; and/or,
information about the spreading sequence applied to the interfering layer or the interfering UE comprises a spreading sequence applied to each interfering layer or each interfering UE; or an index of the spreading sequence applied to each interfering layer or each interfering UE; or a combination of a spreading sequence applied to an interfering layer or an interfering UE interfering with a received signal of the UE; or a first index indicating an index, of the combination of the spreading sequence applied to the interfering layer or the interfering UE interfering with the received signal of the UE, among all possible combinations; and/or,
information about transmit power applied to the interfering layer or the interfering UE comprises transmit power applied to each interfering layer or each interfering UE; or an index of the transmit power applied to each interfering layer or each interfering UE; or a combination sequence of transmit power and a spreading sequence applied to each interfering layer or each interfering UE interfering with the received signal of the UE; or a combination sequence of transmit power and a spreading sequence applied to an interfering layer or an interfering UE interfering with the received signal of the UE; or an index of a combination sequence of transmit power and a spreading sequence applied to each interfering layer or each interfering UE; or a second index indicating an index, of a combination of the transmit power and the spreading sequence applied to the interfering layer or the interfering UE interfering with the received signal of the UE, among all possible combination; and/or,
information about the modulation and coding scheme applied to the interfering layer or the interfering UE comprises a modulation and coding scheme applied to each interfering layer or each interfering UE; or a modulation and coding scheme applied to a first interfering layer or a first interfering UE, and a difference between a modulation and coding scheme applied to a second interfering layer or a second interfering UE, and the modulation and coding scheme applied to the first interfering layer or the first interfering UE; or a difference between a modulation and coding scheme applied to each interfering layer or each interfering UE, and a modulation and coding scheme applied to the UE; and/or,
information about the coding rate applied to the interfering layer or the interfering UE comprises a coding rate applied to each interfering layer or each interfering UE; or a coding rate applied to a first interfering layer or a first interfering UE, and a difference between a coding rate applied to a second interfering layer or a second interfering UE, and the coding rate applied to the first interfering layer or the first interfering UE; or a difference between a coding rate applied to each interfering layer or each interfering UE, and a coding rate applied to the UE; and/or,
information about the PRB index applied to the interfering layer or the interfering UE comprises a PRB index applied to each interfering layer or each interfering UE; or a PRB index applied to a first interfering layer or a first interfering UE, and a difference between a PRB index applied to a second interfering layer or a second interfering UE, and the PRB index applied to the first interfering layer or the first interfering UE; or a difference between a PRB index applied to each interfering layer or each interfering UE, and a PRB index applied to the UE; and/or,
information about the modulation order applied to the interfering layer or the interfering UE comprises a modulation order applied to each interfering layer or each interfering UE; or a modulation order applied to a first interfering layer or a first interfering UE, and a difference between a modulation order applied to a second interfering layer or a second interfering UE, and the modulation order applied to the first interfering layer or the first interfering UE; or a difference between a modulation order applied to each interfering layer or each interfering UE, and a modulation order applied to the UE.

**Patentansprüche**

1. Verfahren zur Anzeige von Interferenzen, **dadurch gekennzeichnet, dass** das Verfahren umfasst:

   Bestimmen (101), durch ein Netzwerkgerät, einer Interferenzinformation, die einem Benutzergerät (User Equipment, UE) angezeigt werden soll, wobei die Interferenzinformation, die keine Parameter enthält, das UE anweist, keinen Interferenzunterdrückungsvorgang auszuführen, und die Interferenzinformation, die Parameter enthält, dem UE angibt, Interferenzen unter Verwendung dieser Parameter zu unterdrücken; und
   Anzeigen (102), durch das Netzwerkgerät, der Interferenzinformation für das UE mittels Signalisierung.

2. Verfahren nach Anspruch 1, wobei die Interferenzinformation eine Information über eine interferierende Schicht oder eine Information über ein interferierendes UE umfasst.

3. Verfahren nach Anspruch 2, wobei die Interferenzinformation einen oder eine beliebige Kombination der folgenden Parameter umfasst:

   eine Anzahl der interferierenden Schichten oder eine Anzahl der interferierenden UEs;
   einen Interferenzunterdrückungsindikator;
   eine auf die interferierende Schicht oder das interferierende UE angewendete Spreizsequenz;
   eine auf die interferierende Schicht oder das interferierende UE angewendete Übertragungsleistung;
   ein auf die interferierende Schicht oder das interferierende UE angewendetes Modulations- und Kodierungsschema;
   eine auf die interferierende Schicht oder das interferierende UE angewendete Kodierrate;
   eine auf die interferierende Schicht oder das interferierende UE angewendete Modulationsordnung;
   einen auf die interferierende Schicht oder das interferierende UE angewendeten Index des physikalischen Ressourcenblocks (Physical Resource Block, PRB); oder
   eine auf die interferierende Schicht oder das interferierende UE angewendete temporäre Funknetzkennung (Radio Network Temporary Identity, RNTI) oder Verschlüsselungssequenz.

4. Verfahren nach Anspruch 3, wobei:

   eine Information über den Interferenzunterdrückungsindikator einen Interferenzunterdrückungsindikator umfasst, der jeder interferierenden Schicht oder jedem interferierenden UE entspricht, wobei der Interferenzunterdrückungsindikator, der jeder interferierenden Schicht oder jedem interferierenden UE entspricht, anzeigt, ob die Interferenzen jeder interferierenden Schicht oder jedes interferierenden UE unterdrückt werden sollen; oder einen Interferenzunterdrückungsindikator umfasst, der die interferierende Schicht oder das interferierende UE anzeigt, von denen Interferenzen durch das UE unterdrückt werden müssen; und/oder,
   eine Information über die auf die interferierende Schicht oder das interferierende UE angewendete Spreizsequenz eine auf jede interferierende Schicht oder jedes interferierende UE angewendete Spreizsequenz umfasst; oder einen Index der Spreizsequenz, der auf jede interferierende Schicht oder jedes interferierende UE angewendet wird; oder eine Kombination einer Spreizsequenz, die auf eine interferierende Schicht oder ein interferierendes UE angewendet wird, die mit einem empfangenen Signal des UE interferiert; oder einen ersten Index, der unter allen möglichen Kombinationen einen Index der Kombination der Spreizsequenz anzeigt, der auf die interferierende Schicht oder das interferierende UE angewendet wird, der mit dem empfangenen Signal des UE interferiert; und/oder,
   eine Information über die auf die interferierende Schicht oder das interferierende UE angewendete Übertragungsleistung eine auf jede interferierende Schicht oder jedes interferierende UE angewendete Übertragungsleistung umfasst; oder einen Index der Übertragungsleistung, der auf jede interferierende Schicht oder jedes interferierende UE angewendet wird; oder eine Kombinationssequenz aus Übertragungsleistung und einer Spreizsequenz, die auf jede interferierende Schicht oder jedes interferierende UE angewendet wird, die mit dem empfangenen Signal des UE interferiert; oder eine Kombinationssequenz aus Übertragungsleistung und einer Spreizsequenz, die auf eine interferierende Schicht oder ein interferierendes UE angewendet wird, die mit dem empfangenen Signal des UE interferiert; oder einen Index einer Kombinationssequenz aus Übertragungsleistung und einer Spreizsequenz, der auf jede interferierende Schicht oder jedes interferierende UE angewendet wird; oder einen zweiten Index, der unter allen möglichen Kombinationen einen Index einer Kombination der Übertragungsleistung und der Spreizsequenz anzeigt, der auf die interferierende Schicht oder das interferierende UE angewendet wird, der mit dem empfangenen Signal des UE interferiert; und/oder,

eine Information über das Modulations- und Kodierungsschema, das auf die interferierende Schicht oder das interferierende UE angewendet wird, ein Modulations- und Kodierungsschema umfasst, das auf jede interferierende Schicht oder jedes interferierende UE angewendet wird; oder ein Modulations- und Kodierungsschema, das auf eine erste interferierende Schicht oder ein erstes interferierendes UE angewendet wird, und eine Differenz zwischen einem Modulations- und Kodierungsschema, das auf eine zweite interferierende Schicht oder ein zweites interferierendes UE angewendet wird, und dem Modulations- und Kodierungsschema, das auf die erste interferierende Schicht oder das erste interferierende UE angewendet wird; oder eine Differenz zwischen einem Modulations- und Kodierungsschema, das auf jede interferierende Schicht oder jedes interferierende UE angewendet wird, und einem Modulations- und Kodierungsschema, das auf das UE angewendet wird; und/oder,

eine Information über die auf die interferierende Schicht oder das interferierende UE angewendete Kodierrate eine auf jede interferierende Schicht oder jedes interferierende UE angewendete Kodierrate umfasst; oder eine Kodierrate, die auf eine erste interferierende Schicht oder ein erstes interferierendes UE angewendet wird, und eine Differenz zwischen einer Kodierrate, die auf eine zweite interferierende Schicht oder ein zweites interferierendes UE angewendet wird, und der Kodierrate, die auf die erste interferierende Schicht oder das erste interferierende UE angewendet wird; oder eine Differenz zwischen einer Kodierrate, die auf jede interferierende Schicht oder jedes interferierende UE angewendet wird, und einer Kodierrate, die auf das UE angewendet wird; und/oder,

eine Information über den auf die interferierende Schicht oder das interferierende UE angewendeten PRB-Index einen auf jede interferierende Schicht oder jedes interferierende UE angewendeten PRB-Index umfasst; oder einen PRB-Index, der auf eine erste interferierende Schicht oder ein erstes interferierendes UE angewendet wird, und eine Differenz zwischen einem PRB-Index, der auf eine zweite interferierende Schicht oder ein zweites interferierendes UE angewendet wird, und dem PRB-Index, der auf die erste interferierende Schicht oder das erste interferierende UE angewendet wird; oder eine Differenz zwischen einem PRB-Index, der auf jede interferierende Schicht oder jedes interferierende UE angewendet wird, und einem PRB-Index, der auf das UE angewendet wird; und/oder,

eine Information über die auf die interferierende Schicht oder das interferierende UE angewendete Modulationsordnung eine auf jede interferierende Schicht oder jedes interferierende UE angewendete Modulationsordnung umfasst; oder eine Modulationsordnung, die auf eine erste interferierende Schicht oder ein erstes interferierendes UE angewendet wird, und eine Differenz zwischen einer Modulationsordnung, die auf eine zweite interferierende Schicht oder ein zweites interferierendes UE angewendet wird, und der Modulationsordnung, die auf die erste interferierende Schicht oder das erste interferierende UE angewendet wird; oder eine Differenz zwischen einer Modulationsordnung, die auf jede interferierende Schicht oder jedes interferierende UE angewendet wird, und einer Modulationsordnung, die auf das UE angewendet wird.

5. Verfahren nach einem der Ansprüche 1 bis 4, wobei das Anzeigen der Interferenzinformation an das UE mittels Signalisierung umfasst:

Anzeigen der Interferenzinformation an das UE mittels dynamischer Signalisierung, wobei die dynamische Signalisierung das UE anweist, alle, einen Teil oder keine Interferenzen in dem empfangenen Signal in allen von dem UE belegten PRBs gemäß der Interferenzinformation zu unterdrücken; oder
Anzeigen der Interferenzinformation an das UE mittels semistatischer Signalisierung.

6. Verfahren zur Unterdrückung von Interferenzen, **dadurch gekennzeichnet, dass** das Verfahren umfasst:

Erhalten (201), durch ein Benutzergerät (UE), einer Interferenzinformation, die von einem Netzwerkgerät angezeigt wird, mittels Signalisierung;
wobei die Interferenzinformation, die keine Parameter enthält, das UE anweist, keinen Interferenzunterdrückungsvorgang auszuführen, und die Interferenzinformation, die Parameter enthält, dem UE angibt, Interferenzen unter Verwendung dieser Parameter zu unterdrücken;
Unterdrücken (202), durch das UE, aller, eines Teils oder keiner Interferenzen in dem empfangenen Signal gemäß der Interferenzinformation.

**7.** Verfahren nach Anspruch 6, wobei die Interferenzinformation eine Information über eine interferierende Schicht oder eine Information über ein interferierendes UE umfasst.

**8.** Verfahren nach Anspruch 7, wobei die Interferenzinformation einen oder eine beliebige Kombination der folgenden Parameter umfasst:

eine Anzahl der interferierenden Schichten oder eine Anzahl der interferierenden UEs;
einen Interferenzunterdrückungsindikator;
eine auf die interferierende Schicht oder das interferierende UE angewendete Spreizsequenz;
eine auf die interferierende Schicht oder das interferierende UE angewendete Übertragungsleistung;
ein auf die interferierende Schicht oder das interferierende UE angewendetes Modulations- und Kodierungsschema;
eine auf die interferierende Schicht oder das interferierende UE angewendete Kodierrate;
eine auf die interferierende Schicht oder das interferierende UE angewendete Modulationsordnung;
einen auf die interferierende Schicht oder das interferierende UE angewendeten Index des physikalischen Ressourcenblocks (Physical Resource Block, PRB); oder
eine auf die interferierende Schicht oder das interferierende UE angewendete temporäre Funknetzkennung (Radio Network Temporary Identity, RNTI) oder Verschlüsselungssequenz.

**9.** Verfahren nach Anspruch 8, wobei:

eine Information über den Interferenzunterdrückungsindikator einen Interferenzunterdrückungsindikator umfasst, der jeder interferierenden Schicht oder jedem interferierenden UE entspricht, wobei der Interferenzunterdrückungsindikator, der jeder interferierenden Schicht oder jedem interferierenden UE entspricht, anzeigt, ob die Interferenzen jeder interferierenden Schicht oder jedes interferierenden UE unterdrückt werden sollen; oder einen Interferenzunterdrückungsindikator umfasst, der die interferierende Schicht oder das interferierende UE anzeigt, von denen Interferenzen durch das UE unterdrückt werden müssen; und/oder, eine Information über die auf die interferierende Schicht oder das interferierende UE angewendete Spreizsequenz eine auf jede interferierende Schicht oder jedes interferierende UE angewendete Spreizsequenz umfasst; oder einen Index der Spreizsequenz, der auf jede interferierende Schicht oder jedes interferierende UE angewendet wird; oder eine Kombination einer Spreizsequenz, die auf eine interferierende Schicht oder ein interferierendes UE angewendet wird, die mit einem empfangenen Signal des UE interferiert; oder einen ersten Index, der unter allen möglichen Kombinationen einen Index der Kombination der Spreizsequenz anzeigt, der auf die interferierende Schicht oder das interferierende UE angewendet wird, der mit dem empfangenen Signal des UE interferiert; und/oder, eine Information über die auf die interferierende Schicht oder das interferierende UE angewendete Übertragungsleistung eine auf jede interferierende Schicht oder jedes interferierende UE angewendete Übertragungsleistung umfasst; oder einen Index der Übertragungsleistung, der auf jede interferierende Schicht oder jedes interferierende UE angewendet wird; oder eine Kombinationssequenz aus Übertragungsleistung und einer Spreizsequenz, die auf jede interferierende Schicht oder jedes interferierende UE angewendet wird, die mit dem empfangenen Signal des UE interferiert; oder eine Kombinationssequenz aus Übertragungsleistung und einer Spreizsequenz, die auf eine interferierende Schicht oder ein interferierendes UE angewendet wird, die mit dem empfangenen Signal des UE interferiert; oder einen Index einer Kombinationssequenz aus Übertragungsleistung und einer Spreizsequenz, der auf jede interferierende Schicht oder jedes interferierende UE angewendet wird; oder einen zweiten Index, der unter allen möglichen Kombinationen einen Index einer Kombination der Übertragungsleistung und der Spreizsequenz anzeigt, der auf die interferierende Schicht oder das interferierende UE angewendet wird, der mit dem empfangenen Signal des UE interferiert; und/oder, eine Information über das Modulations- und Kodierungsschema, das auf die interferierende Schicht oder das interferierende UE angewendet wird, ein Modulations- und Kodierungsschema umfasst, das auf jede interferierende Schicht oder jedes interferierende UE angewendet wird; oder ein Modulations- und Kodierungsschema, das auf eine erste interferierende Schicht oder ein erstes interferierendes UE angewendet wird, und eine Differenz zwischen einem Modulations- und Kodierungsschema, das auf eine zweite interferierende Schicht oder ein zweites interferierendes UE angewendet wird, und dem Modulations- und Kodierungsschema, das auf die erste interferierende Schicht oder das erste interferierende UE angewendet wird; oder eine Differenz zwischen einem Modulations- und Kodierungsschema, das auf jede interferierende Schicht oder jedes interferierende UE angewendet wird, und einem Modulations- und Kodierungsschema, das auf das UE angewendet wird; und/oder, eine Information über die auf die interferierende Schicht oder das interferierende UE angewendete Kodierrate eine auf jede interferierende Schicht oder jedes interferierende UE angewendete Kodierrate umfasst; oder eine Kodierrate, die auf eine erste interferierende Schicht oder ein erstes interferierendes UE angewendet wird, und eine Differenz zwischen einer Kodierrate, die auf eine zweite interferierende Schicht oder ein zweites interferierendes UE angewendet wird, und der Kodierrate, die auf die erste interferierende Schicht oder das erste interferierende UE angewendet wird; oder eine Differenz zwischen einer Kodierrate, die auf jede interferierende Schicht oder jedes interferierende UE angewendet wird, und einer Kodierrate, die auf das UE angewendet wird; und/oder,

eine Information über den auf die interferierende Schicht oder das interferierende UE angewendeten PRB-Index einen auf jede interferierende Schicht oder jedes interferierende UE angewendeten PRB-Index umfasst; oder einen PRB-Index, der auf eine erste interferierende Schicht oder ein erstes interferierendes UE angewendet wird, und eine Differenz zwischen einem PRB-Index, der auf eine zweite interferierende Schicht oder ein zweites interferierendes UE angewendet wird, und dem PRB-Index, der auf die erste interferierende Schicht oder das erste interferierende UE angewendet wird; oder eine Differenz zwischen einem PRB-Index, der auf jede interferierende Schicht oder jedes interferierende UE angewendet wird, und einem PRB-Index, der auf das UE angewendet wird; und/oder,

eine Information über die auf die interferierende Schicht oder das interferierende UE angewendete Modulationsordnung eine auf jede interferierende Schicht oder jedes interferierende UE angewendete Modulationsordnung umfasst; oder eine Modulationsordnung, die auf eine erste interferierende Schicht oder ein erstes interferierendes UE angewendet wird, und eine Differenz zwischen einer Modulationsordnung, die auf eine zweite interferierende Schicht oder ein zweites interferierendes UE angewendet wird, und der Modulationsordnung, die auf die erste interferierende Schicht oder das erste interferierende UE angewendet wird; oder eine Differenz zwischen einer Modulationsordnung, die auf jede interferierende Schicht oder jedes interferierende UE angewendet wird, und einer Modulationsordnung, die auf das UE angewendet wird.

**10.** Netzwerkgerät, **dadurch gekennzeichnet, dass** das Netzwerkgerät umfasst:

eine Bestimmungseinheit (301), die konfiguriert ist, um eine Interferenzinformation zu bestimmen, die einem Benutzergerät (UE) angezeigt werden soll, wobei die Interferenzinformation, die keine Parameter enthält, das UE anweist, keinen Interferenzunterdrückungsvorgang auszuführen, und die Interferenzinformation, die Parameter enthält, dem UE angibt, Interferenzen unter Verwendung dieser Parameter zu unterdrücken; und eine Übertragungseinheit (302), die konfiguriert ist, um dem UE die Interferenzinformation mittels Signalisierung anzuzeigen.

**11.** Netzwerkgerät nach Anspruch 10, wobei die Interferenzinformation eine Information über eine interferierende Schicht oder eine Information über ein interferierendes UE umfasst.

**12.** Netzwerkgerät nach Anspruch 11, wobei die Interferenzinformation einen oder eine beliebige Kombination der folgenden Parameter umfasst:

eine Anzahl der interferierenden Schichten oder eine Anzahl der interferierenden UEs; einen Interferenzunterdrückungsindikator; eine auf die interferierende Schicht oder das interferierende UE angewendete Spreizsequenz; eine auf die interferierende Schicht oder das interferierende UE angewendete Übertragungsleistung; ein auf die interferierende Schicht oder das interferierende UE angewendetes Modulations- und Kodierungsschema; eine auf die interferierende Schicht oder das interferierende UE angewendete Kodierrate; eine auf die interferierende Schicht oder das interferierende UE angewendete Modulationsordnung; einen auf die interferierende Schicht oder das interferierende UE angewendeten Index des physikalischen Ressourcenblocks (Physical Resource Block, PRB); oder eine auf die interferierende Schicht oder das interferierende UE angewendete temporäre Funknetzkennung (Radio Network Temporary Identity, RNTI) oder Verschlüsselungssequenz.

**13.** Netzwerkgerät nach Anspruch 12, wobei:

eine Information über den Interferenzunterdrückungsindikator einen Interferenzunterdrückungsindikator umfasst, der jeder interferierenden Schicht oder jedem interferierenden UE entspricht, wobei der Interferenzunterdrückungsindikator, der jeder interferierenden Schicht oder jedem interferierenden UE entspricht, anzeigt, ob die Interferenzen jeder interferierenden Schicht oder jedes interferierenden UE unterdrückt werden sollen;

oder einen Interferenzunterdrückungsindikator umfasst, der die interferierende Schicht oder das interferierende UE anzeigt, von denen Interferenzen durch das UE unterdrückt werden müssen; und/oder,

eine Information über die auf die interferierende Schicht oder das interferierende UE angewendete Spreizsequenz eine auf jede interferierende Schicht oder jedes interferierende UE angewendete Spreizsequenz umfasst; oder einen Index der Spreizsequenz, der auf jede interferierende Schicht oder jedes interferierende UE angewendet wird; oder eine Kombination einer Spreizsequenz, die auf eine interferierende Schicht oder ein interferierendes UE angewendet wird, die mit einem empfangenen Signal des UE interferiert; oder einen ersten Index, der unter allen möglichen Kombinationen einen Index der Kombination der Spreizsequenz anzeigt, der auf die interferierende Schicht oder das interferierende UE angewendet wird, der mit dem empfangenen Signal des UE interferiert; und/oder,

eine Information über die auf die interferierende Schicht oder das interferierende UE angewendete Übertragungsleistung eine auf jede interferierende Schicht oder jedes interferierende UE angewendete Übertragungsleistung umfasst; oder einen Index der Übertragungsleistung, der auf jede interferierende Schicht oder jedes interferierende UE angewendet wird; oder eine Kombinationssequenz aus Übertragungsleistung und einer Spreizsequenz, die auf jede interferierende Schicht oder jedes interferierende UE angewendet wird, die mit dem empfangenen Signal des UE interferiert; oder eine Kombinationssequenz aus Übertragungsleistung und einer Spreizsequenz, die auf eine interferierende Schicht oder ein interferierendes UE angewendet wird, die mit dem empfangenen Signal des UE interferiert; oder einen Index einer Kombinationssequenz aus Übertragungsleistung und einer Spreizsequenz, der auf jede interferierende Schicht oder jedes interferierende UE angewendet wird; oder einen zweiten Index, der unter allen möglichen Kombinationen einen Index einer Kombination der Übertragungsleistung und der Spreizsequenz anzeigt, der auf die interferierende Schicht oder das interferierende UE angewendet wird, der mit dem empfangenen Signal des UE interferiert; und/oder,

eine Information über das Modulations- und Kodierungsschema, das auf die interferierende Schicht oder das interferierende UE angewendet wird, ein Modulations- und Kodierungsschema umfasst, das auf jede interferierende Schicht oder jedes interferierende UE angewendet wird; oder ein Modulations- und Kodierungsschema, das auf eine erste interferierende Schicht oder ein erstes interferierendes UE angewendet wird, und eine Differenz zwischen einem Modulations- und Kodierungsschema, das auf eine zweite interferierende Schicht oder ein zweites interferierendes UE angewendet wird, und dem Modulations- und Kodierungsschema, das auf die erste interferierende Schicht oder das erste interferierende UE angewendet wird; oder eine Differenz zwischen einem Modulations- und Kodierungsschema, das auf jede interferierende Schicht oder jedes interferierende UE angewendet wird, und einem Modulations- und Kodierungsschema, das auf das UE angewendet wird; und/oder,

eine Information über die auf die interferierende Schicht oder das interferierende UE angewendete Kodierrate eine auf jede interferierende Schicht oder jedes interferierende UE angewendete Kodierrate umfasst; oder eine Kodierrate, die auf eine erste interferierende Schicht oder ein erstes interferierendes UE angewendet wird, und eine Differenz zwischen einer Kodierrate, die auf eine zweite interferierende Schicht oder ein zweites interferierendes UE angewendet wird, und der Kodierrate, die auf die erste interferierende Schicht oder das erste interferierende UE angewendet wird; oder eine Differenz zwischen einer Kodierrate, die auf jede interferierende Schicht oder jedes interferierende UE angewendet wird, und einer Kodierrate, die auf das UE angewendet wird; und/oder,

eine Information über den auf die interferierende Schicht oder das interferierende UE angewendeten PRB-Index einen auf jede interferierende Schicht oder jedes interferierende UE angewendeten PRB-Index umfasst; oder einen PRB-Index, der auf eine erste interferierende Schicht oder ein erstes interferierendes UE angewendet wird, und eine Differenz zwischen einem PRB-Index, der auf eine zweite interferierende Schicht oder ein zweites interferierendes UE angewendet wird, und dem PRB-Index, der auf die erste interferierende Schicht oder das erste interferierende UE angewendet wird; oder eine Differenz zwischen einem PRB-Index, der auf jede interferierende Schicht oder jedes interferierende UE angewendet wird, und einem PRB-Index, der auf das UE angewendet wird; und/oder,

eine Information über die auf die interferierende Schicht oder das interferierende UE angewendete Modulationsordnung eine auf jede interferierende Schicht oder jedes interferierende UE angewendete Modulationsordnung umfasst; oder eine Modulationsordnung, die auf eine erste interferierende Schicht oder ein erstes interferierendes UE angewendet wird, und eine Differenz zwischen einer Modulationsordnung, die auf eine zweite interferierende Schicht oder ein zweites interferierendes UE angewendet wird, und der Modulationsordnung, die auf die erste interferierende Schicht oder das erste interferierende UE angewendet wird; oder eine Differenz zwischen einer Modulationsordnung, die auf jede interferierende Schicht oder jedes interferierende UE angewendet wird, und einer Modulationsordnung, die auf das UE angewendet wird.

14. Benutzergerät, **dadurch gekennzeichnet, dass** das UE umfasst:

eine Erlangungseinheit (401), die konfiguriert ist, um eine von einer Netzwerkvorrichtung angezeigte Interferenzinformation mittels Signalisierung zu erhalten; wobei die Interferenzinformation, die keine Parameter enthält, das UE anweist, keinen Interferenzunterdrückungsvorgang auszuführen, und die Interferenzinformation, die Parameter enthält, dem UE angibt, Interferenzen unter Verwendung dieser Parameter zu unterdrücken; und eine Verarbeitungseinheit (402), die konfiguriert ist, um alle, einen Teil oder keine der Interferenzen in dem empfangenen Signal gemäß der Interferenzinformation zu unterdrücken.

15. UE nach Anspruch 14, wobei die Interferenzinformation eine Information über eine interferierende Schicht oder eine Information über ein interferierendes UE umfasst.

16. UE nach Anspruch 15, wobei die Interferenzinformation einen oder eine beliebige Kombination der folgenden Parameter umfasst:

eine Anzahl der interferierenden Schichten oder eine Anzahl der interferierenden UEs;
einen Interferenzunterdrückungsindikator;
eine auf die interferierende Schicht oder das interferierende UE angewendete Spreizsequenz;
eine auf die interferierende Schicht oder das interferierende UE angewendete Übertragungsleistung;
ein auf die interferierende Schicht oder das interferierende UE angewendetes Modulations- und Kodierungsschema;
eine auf die interferierende Schicht oder das interferierende UE angewendete Kodierrate;
eine auf die interferierende Schicht oder das interferierende UE angewendete Modulationsordnung;
einen auf die interferierende Schicht oder das interferierende UE angewendeten Index des physikalischen Ressourcenblocks (Physical Resource Block, PRB); oder
eine auf die interferierende Schicht oder das interferierende UE angewendete temporäre Funknetzkennung (Radio Network Temporary Identity, RNTI) oder Verschlüsselungssequenz.

17. UE nach Anspruch 16, wobei:

eine Information über den Interferenzunterdrückungsindikator einen Interferenzunterdrückungsindikator umfasst, der jeder interferierenden Schicht oder jedem interferierenden UE entspricht, wobei der Interferenzunterdrückungsindikator, der jeder interferierenden Schicht oder jedem interferierenden UE entspricht, anzeigt, ob die Interferenzen jeder interferierenden Schicht oder jedes interferierenden UE unterdrückt werden sollen; oder einen Interferenzunterdrückungsindikator umfasst, der die interferierende Schicht oder das interferierende UE anzeigt, von denen Interferenzen durch das UE unterdrückt werden müssen; und/oder,
eine Information über die auf die interferierende Schicht oder das interferierende UE angewendete Spreizsequenz eine auf jede interferierende Schicht oder jedes interferierende UE angewendete Spreizsequenz umfasst; oder einen Index der Spreizsequenz, der auf jede interferierende Schicht oder jedes interferierende UE angewendet wird; oder eine Kombination einer Spreizsequenz, die auf eine interferierende Schicht oder ein interferierendes UE angewendet wird, die mit einem empfangenen Signal des UE interferiert; oder einen ersten Index, der unter allen möglichen Kombinationen einen Index der Kombination der Spreizsequenz anzeigt, der auf die interferierende Schicht oder das interferierende UE angewendet wird, der mit dem empfangenen Signal des UE interferiert; und/oder,
eine Information über die auf die interferierende Schicht oder das interferierende UE angewendete Übertragungsleistung eine auf jede interferierende Schicht oder jedes interferierende UE angewendete Übertragungsleistung umfasst; oder einen Index der Übertragungsleistung, der auf jede interferierende Schicht oder jedes interferierende UE angewendet wird; oder eine Kombinationssequenz aus Übertragungsleistung und einer Spreizsequenz, die auf jede interferierende Schicht oder jedes interferierende UE angewendet wird, die mit dem empfangenen Signal des UE interferiert; oder eine Kombinationssequenz aus Übertragungsleistung und einer Spreizsequenz, die auf eine interferierende Schicht oder ein interferierendes UE angewendet wird, die mit dem empfangenen Signal des UE interferiert; oder einen Index einer Kombinationssequenz aus Übertragungsleistung und einer Spreizsequenz, der auf jede interferierende Schicht oder jedes interferierende UE angewendet wird; oder einen zweiten Index, der unter allen möglichen Kombinationen einen Index einer Kombination der Übertragungsleistung und der Spreizsequenz anzeigt, der auf die interferierende Schicht oder das interferierende UE angewendet wird, der mit dem empfangenen Signal des UE interferiert; und/oder,
eine Information über das Modulations- und Kodierungsschema, das auf die interferierende Schicht oder das interferierende UE angewendet wird, ein Modulations- und Kodierungsschema umfasst, das auf jede interferierende Schicht oder jedes interferierende UE angewendet wird; oder ein Modulations- und Kodierungsschema, das auf eine erste interferierende Schicht oder ein erstes interferierendes UE angewendet wird, und eine Differenz zwischen einem Modulations- und Kodierungsschema, das auf eine zweite interferierende Schicht oder ein zweites interferierendes UE angewendet wird, und dem Modulations- und Kodierungsschema, das auf die erste interferierende Schicht oder das erste interferierende UE angewendet wird; oder eine Differenz zwischen einem Modulations- und Kodierungsschema, das auf jede interferierende Schicht oder jedes interferierende UE angewendet wird, und einem Modulations- und Kodierungsschema, das auf das UE angewendet wird; und/oder,

eine Information über die auf die interferierende Schicht oder das interferierende UE angewendete Kodierrate eine auf jede interferierende Schicht oder jedes interferierende UE angewendete Kodierrate umfasst; oder eine Kodierrate, die auf eine erste interferierende Schicht oder ein erstes interferierendes UE angewendet wird, und eine Differenz zwischen einer Kodierrate, die auf eine zweite interferierende Schicht oder ein zweites interferierendes UE angewendet wird, und der Kodierrate, die auf die erste interferierende Schicht oder das erste interferierende UE angewendet wird; oder eine Differenz zwischen einer Kodierrate, die auf jede interferierende Schicht oder jedes interferierende UE angewendet wird, und einer Kodierrate, die auf das UE angewendet wird; und/oder,

eine Information über den auf die interferierende Schicht oder das interferierende UE angewendeten PRB-Index einen auf jede interferierende Schicht oder jedes interferierende UE angewendeten PRB-Index umfasst; oder einen PRB-Index, der auf eine erste interferierende Schicht oder ein erstes interferierendes UE angewendet wird, und eine Differenz zwischen einem PRB-Index, der auf eine zweite interferierende Schicht oder ein zweites interferierendes UE angewendet wird, und dem PRB-Index, der auf die erste interferierende Schicht oder das erste interferierende UE angewendet wird; oder eine Differenz zwischen einem PRB-Index, der auf jede interferierende Schicht oder jedes interferierende UE angewendet wird, und einem PRB-Index, der auf das UE angewendet wird; und/oder,

eine Information über die auf die interferierende Schicht oder das interferierende UE angewendete Modulationsordnung eine auf jede interferierende Schicht oder jedes interferierende UE angewendete Modulationsordnung umfasst; oder eine Modulationsordnung, die auf eine erste interferierende Schicht oder ein erstes interferierendes UE angewendet wird, und eine Differenz zwischen einer Modulationsordnung, die auf eine zweite interferierende Schicht oder ein zweites interferierendes UE angewendet wird, und der Modulationsordnung, die auf die erste interferierende Schicht oder das erste interferierende UE angewendet wird; oder eine Differenz zwischen einer Modulationsordnung, die auf jede interferierende Schicht oder jedes interferierende UE angewendet wird, und einer Modulationsordnung, die auf das UE angewendet wird.

## Revendications

1. Procédé d'indication de brouillage, le procédé étant **caractérisé en ce qu'**il consiste à :

déterminer (101), par un dispositif de réseau, une information de brouillage à indiquer à un équipement d'utilisateur (UE), si une information de brouillage n'inclut aucun paramètre, l'information de brouillage donnant l'instruction à l'UE de ne réaliser aucune opération d'annulation de brouillage, et si une information de brouillage inclut des paramètres, l'information de brouillage indiquant à l'UE d'annuler un brouillage au moyen de ces paramètres ; et
indiquer (102), par le dispositif de réseau, l'information de brouillage à l'UE par l'intermédiaire d'une signalisation.

2. Procédé selon la revendication 1, dans lequel l'information de brouillage comprend une information concernant une couche brouilleuse ou une information concernant un UE brouilleur.

3. Procédé selon la revendication 2, dans lequel l'information de brouillage comprend une ou plusieurs combinaisons quelconques des paramètres suivants :

un numéro de la couche brouilleuse ou un numéro de l'UE brouilleur ;
un indicateur d'annulation de brouillage ;
une séquence d'étalement appliquée à la couche brouilleuse ou à l'UE brouilleur ;
une puissance de transmission appliquée à la couche brouilleuse ou à l'UE brouilleur ;
un schéma de modulation et de codage appliqué à la couche brouilleuse ou à l'UE brouilleur ;
un taux de codage appliqué à la couche brouilleuse ou à l'UE brouilleur ;
un ordre de modulation appliqué à la couche brouilleuse ou à l'UE brouilleur ;
un index de bloc de ressources physiques (PRB) appliqué à la couche brouilleuse ou à l'UE brouilleur ; ou
une identité temporaire de réseau radio (RNTI) ou une séquence d'embrouillage appliquée à la couche brouilleuse ou à l'UE brouilleur.

4. Procédé selon la revendication 3, dans lequel :

une information concernant l'indicateur d'annulation de brouillage comprend un indicateur d'annulation de brouillage correspondant à chaque couche brouilleuse ou à chaque UE brouilleur, l'indicateur d'annulation de brouillage correspondant à chaque couche brouilleuse ou à chaque UE brouilleur indiquant s'il faut annuler un brouillage de chaque couche brouilleuse ou de chaque UE brouilleur ; ou comprend un indicateur d'annulation de brouillage indiquant la couche brouilleuse ou l'UE brouilleur dont le brouillage doit être annulé par l'UE ; et/ou une information concernant la séquence d'étalement appliquée à la couche brouilleuse ou à l'UE brouilleur comprend une séquence d'étalement appliquée à chaque couche brouilleuse ou à chaque UE brouilleur ; ou un index de la séquence d'étalement appliquée à chaque couche brouilleuse ou à chaque UE brouilleur ; ou une combinaison d'une séquence d'étalement appliquée à une couche brouilleuse ou à un UE brouilleur brouillant un signal reçu de l'UE ; ou un premier index indiquant un index, parmi toutes les combinaisons possibles, de la combinaison de la séquence d'étalement appliquée à la couche brouilleuse ou à l'UE brouilleur brouillant le signal reçu de l'UE ; et/ou une information concernant une puissance de transmission appliquée à la couche brouilleuse ou à l'UE brouilleur comprend une puissance de transmission appliquée à chaque couche brouilleuse ou à chaque UE brouilleur ; ou un index de la puissance de transmission appliquée à chaque couche brouilleuse ou à chaque UE brouilleur ; ou une séquence combinée d'une puissance de transmission et d'une séquence d'étalement appliquée à chaque couche brouilleuse ou à chaque UE brouilleur brouillant le signal reçu de l'UE ; ou une séquence combinée d'une puissance de transmission et d'une séquence d'étalement appliquée à une couche brouilleuse ou à un UE brouilleur brouillant le signal reçu de l'UE ; ou un index d'une séquence combinée d'une puissance de transmission et d'une séquence d'étalement appliquée à chaque couche brouilleuse ou à chaque UE brouilleur ; ou un second index indiquant un index, parmi toutes les combinaisons possibles, d'une combinaison de la puissance de transmission et de la séquence d'étalement appliquée à la couche brouilleuse ou à l'UE brouilleur brouillant le signal reçu de l'UE ; et/ou une information concernant le schéma de modulation et de codage appliqué à la couche brouilleuse ou à l'UE brouilleur comprend un schéma de modulation et de codage appliqué à chaque couche brouilleuse ou à chaque UE brouilleur ; ou un schéma de modulation et de codage appliqué à une première couche brouilleuse ou à un premier UE brouilleur, et une différence entre un schéma de modulation et de codage appliqué à une seconde couche brouilleuse ou à un second UE brouilleur et le schéma de modulation et de codage appliqué à la première couche brouilleuse ou au premier UE brouilleur ; ou une différence entre un schéma de modulation et de codage appliqué à chaque couche brouilleuse ou à chaque UE brouilleur et un schéma de modulation et de codage appliqué à l'UE ; et/ou une information concernant le taux de codage appliqué à la couche brouilleuse ou à l'UE brouilleur comprend un taux de codage appliqué à chaque couche brouilleuse ou à chaque UE brouilleur ; ou un taux de codage appliqué à une première couche brouilleuse ou à un premier UE brouilleur, et une différence entre un taux de codage appliqué à une seconde couche brouilleuse ou à un second UE brouilleur et le taux de codage appliqué à la première couche brouilleuse ou au premier UE brouilleur ; ou une différence entre un taux de codage appliqué à chaque couche brouilleuse ou à chaque UE brouilleur et un taux de codage appliqué à l'UE ; et/ou une information concernant l'index PRB appliqué à la couche brouilleuse ou à l'UE brouilleur comprend un index PRB appliqué à chaque couche brouilleuse ou à chaque UE brouilleur ; ou un index PRB appliqué à une première couche brouilleuse ou à un premier UE brouilleur, et une différence entre un index PRB appliqué à une seconde couche brouilleuse ou à un second UE brouilleur et l'index PRB appliqué à la première couche brouilleuse ou au premier UE brouilleur ; ou une différence entre un index PRB appliqué à chaque couche brouilleuse ou à chaque UE brouilleur et un index PRB appliqué à l'UE ; et/ou une information concernant l'ordre de modulation appliqué à la couche brouilleuse ou à l'UE brouilleur comprend un ordre de modulation appliqué à chaque couche brouilleuse ou à chaque UE brouilleur ; ou un ordre de modulation appliqué à une première couche brouilleuse ou à un premier UE brouilleur, et une différence entre un ordre de modulation appliqué à une seconde couche brouilleuse ou à un second UE brouilleur et l'ordre de modulation appliqué à la première couche brouilleuse ou au premier UE brouilleur ; ou une différence entre un ordre de modulation appliqué à chaque couche brouilleuse ou à chaque UE brouilleur et un ordre de modulation appliqué à l'UE.

5. Procédé selon l'une quelconque des revendications 1 à 4, dans lequel l'indication de l'information de brouillage à l'UE par l'intermédiaire d'une signalisation consiste à :

indiquer l'information de brouillage à l'UE par l'intermédiaire d'une signalisation dynamique, la signalisation dynamique donnant l'instruction à l'UE d'annuler tout ou partie ou rien d'un brouillage dans le signal reçu dans tous les PRB occupés par l'UE selon l'information de brouillage ; ou
indiquer l'information de brouillage à l'UE par l'intermédiaire d'une signalisation semi-statique.

6. Procédé d'annulation de brouillage, le procédé étant **caractérisé en ce qu'**il consiste à :

obtenir (201), par un équipement d'utilisateur (UE), une information de brouillage indiquée par un dispositif de réseau par l'intermédiaire d'une signalisation ; si une information de brouillage n'inclut aucun paramètre, l'information de brouillage donnant l'instruction à l'UE de ne réaliser aucune opération d'annulation de brouillage, et si une information de brouillage inclut des paramètres, l'information de brouillage indiquant à l'UE d'annuler un brouillage au moyen de ces paramètres ; et
annuler (202), par l'UE, tout ou partie ou rien du brouillage dans le signal reçu selon l'information de brouillage.

7. Procédé selon la revendication 6, dans lequel l'information de brouillage comprend une information concernant une couche brouilleuse ou une information concernant un UE brouilleur.

8. Procédé selon la revendication 7, dans lequel l'information de brouillage comprend une ou plusieurs combinaisons quelconques des paramètres suivants :

un numéro de la couche brouilleuse ou un numéro de l'UE brouilleur ;
un indicateur d'annulation de brouillage ;
une séquence d'étalement appliquée à la couche brouilleuse ou à l'UE brouilleur ;
une puissance de transmission appliquée à la couche brouilleuse ou à l'UE brouilleur ;
un schéma de modulation et de codage appliqué à la couche brouilleuse ou à l'UE brouilleur ;
un taux de codage appliqué à la couche brouilleuse ou à l'UE brouilleur ;
un ordre de modulation appliqué à la couche brouilleuse ou à l'UE brouilleur ;
un index de bloc de ressources physiques (PRB) appliqué à la couche brouilleuse ou à l'UE brouilleur ; ou
une identité temporaire de réseau radio (RNTI) ou une séquence d'embrouillage appliquée à la couche brouilleuse ou à l'UE brouilleur.

9. Procédé selon la revendication 8, dans lequel :

une information concernant l'indicateur d'annulation de brouillage comprend un indicateur d'annulation de brouillage correspondant à chaque couche brouilleuse ou à chaque UE brouilleur, l'indicateur d'annulation de brouillage correspondant à chaque couche brouilleuse ou à chaque UE brouilleur indiquant s'il faut annuler un brouillage de chaque couche brouilleuse ou de chaque UE brouilleur ; ou comprend un indicateur d'annulation de brouillage indiquant la couche brouilleuse ou l'UE brouilleur dont le brouillage doit être annulé par l'UE ; et/ou
une information concernant la séquence d'étalement appliquée à la couche brouilleuse ou à l'UE brouilleur comprend une séquence d'étalement appliquée à chaque couche brouilleuse ou à chaque UE brouilleur ; ou un index de la séquence d'étalement appliquée à chaque couche brouilleuse ou à chaque UE brouilleur ; ou une combinaison d'une séquence d'étalement appliquée à une couche brouilleuse ou à un UE brouilleur brouillant un signal reçu de l'UE ; ou un premier index indiquant un index, parmi toutes les combinaisons possibles, de la combinaison de la séquence d'étalement appliquée à la couche brouilleuse ou à l'UE brouilleur brouillant le signal reçu de l'UE ; et/ou
une information concernant une puissance de transmission appliquée à la couche brouilleuse ou à l'UE brouilleur comprend une puissance de transmission appliquée à chaque couche brouilleuse ou à chaque UE brouilleur ; ou un index de la puissance de transmission appliquée à chaque couche brouilleuse ou à chaque UE brouilleur ; ou une séquence combinée d'une puissance de transmission et d'une séquence d'étalement appliquée à chaque couche brouilleuse ou à chaque UE brouilleur brouillant le signal reçu de l'UE ; ou une séquence combinée d'une puissance de transmission et d'une séquence d'étalement appliquée à une couche brouilleuse ou à un UE brouilleur brouillant le signal reçu de l'UE ; ou un index d'une séquence combinée d'une puissance de transmission et d'une séquence d'étalement appliquée à chaque couche brouilleuse ou à chaque UE brouilleur ; ou un second index indiquant un index, parmi toutes les combinaisons possibles, d'une combinaison de la puissance de transmission et de la séquence d'étalement appliquée à la couche brouilleuse ou à l'UE brouilleur brouillant le signal reçu de l'UE ; et/ou
une information concernant le schéma de modulation et de codage appliqué à la couche brouilleuse ou à l'UE brouilleur comprend un schéma de modulation et de codage appliqué à chaque couche brouilleuse ou à chaque UE brouilleur ; ou un schéma de modulation et de codage appliqué à une première couche brouilleuse ou à un premier UE brouilleur, et une différence entre un schéma de modulation et de codage appliqué à une seconde couche brouilleuse ou à un second UE brouilleur et le schéma de modulation et de codage appliqué à la première couche brouilleuse ou au premier UE brouilleur ; ou une différence entre un schéma de modulation et de codage appliqué à chaque couche brouilleuse ou à chaque UE brouilleur et un schéma de modulation et de codage appliqué à l'UE ; et/ou

une information concernant le taux de codage appliqué à la couche brouilleuse ou à l'UE brouilleur comprend un taux de codage appliqué à chaque couche brouilleuse ou à chaque UE brouilleur ; ou un taux de codage appliqué à une première couche brouilleuse ou à un premier UE brouilleur, et une différence entre un taux de codage appliqué à une seconde couche brouilleuse ou à un second UE brouilleur et le taux de codage appliqué à la première couche brouilleuse ou au premier UE brouilleur ; ou une différence entre un taux de codage appliqué à chaque couche brouilleuse ou à chaque UE brouilleur et un taux de codage appliqué à l'UE ; et/ou

une information concernant l'index PRB appliqué à la couche brouilleuse ou à l'UE brouilleur comprend un index PRB appliqué à chaque couche brouilleuse ou à chaque UE brouilleur ; ou un index PRB appliqué à une première couche brouilleuse ou à un premier UE brouilleur, et une différence entre un index PRB appliqué à une seconde couche brouilleuse ou à un second UE brouilleur et l'index PRB appliqué à la première couche brouilleuse ou au premier UE brouilleur ; ou une différence entre un index PRB appliqué à chaque couche brouilleuse ou à chaque UE brouilleur et un index PRB appliqué à l'UE ; et/ou

une information concernant l'ordre de modulation appliqué à la couche brouilleuse ou à l'UE brouilleur comprend un ordre de modulation appliqué à chaque couche brouilleuse ou à chaque UE brouilleur ; ou un ordre de modulation appliqué à une première couche brouilleuse ou à un premier UE brouilleur, et une différence entre un ordre de modulation appliqué à une seconde couche brouilleuse ou à un second UE brouilleur et l'ordre de modulation appliqué à la première couche brouilleuse ou au premier UE brouilleur ; ou une différence entre un ordre de modulation appliqué à chaque couche brouilleuse ou à chaque UE brouilleur et un ordre de modulation appliqué à l'UE.

10. Dispositif de réseau, le dispositif de réseau étant **caractérisé en ce qu'**il comprend :

une unité de détermination (301), configurée pour déterminer une information de brouillage à indiquer à un équipement d'utilisateur (UE), si une information de brouillage n'inclut aucun paramètre, l'information de brouillage donnant l'instruction à l'UE de ne réaliser aucune opération d'annulation de brouillage, et si une information de brouillage inclut des paramètres, l'information de brouillage indiquant à l'UE d'annuler un brouillage au moyen de ces paramètres ; et

une unité de transmission (302), configurée pour indiquer l'information de brouillage à l'UE par l'intermédiaire d'une signalisation.

11. Dispositif de réseau selon la revendication 10, dans lequel l'information de brouillage comprend une information concernant une couche brouilleuse ou une information concernant un UE brouilleur.

12. Dispositif de réseau selon la revendication 11, dans lequel l'information de brouillage comprend une ou plusieurs combinaisons quelconques des paramètres suivants :

un numéro de la couche brouilleuse ou un numéro de l'UE brouilleur ;
un indicateur d'annulation de brouillage ;
une séquence d'étalement appliquée à la couche brouilleuse ou à l'UE brouilleur ;
une puissance de transmission appliquée à la couche brouilleuse ou à l'UE brouilleur ;
un schéma de modulation et de codage appliqué à la couche brouilleuse ou à l'UE brouilleur ;
un taux de codage appliqué à la couche brouilleuse ou à l'UE brouilleur ;
un ordre de modulation appliqué à la couche brouilleuse ou à l'UE brouilleur ;
un index de bloc de ressources physiques (PRB) appliqué à la couche brouilleuse ou à l'UE brouilleur ; ou
une identité temporaire de réseau radio (RNTI) ou une séquence d'embrouillage appliquée à la couche brouilleuse ou à l'UE brouilleur.

13. Dispositif de réseau selon la revendication 12, dans lequel :

une information concernant l'indicateur d'annulation de brouillage comprend un indicateur d'annulation de brouillage correspondant à chaque couche brouilleuse ou à chaque UE brouilleur, l'indicateur d'annulation de brouillage correspondant à chaque couche brouilleuse ou à chaque UE brouilleur indiquant s'il faut annuler un brouillage de chaque couche brouilleuse ou de chaque UE brouilleur ; ou comprend un indicateur d'annulation de brouillage indiquant la couche brouilleuse ou l'UE brouilleur dont le brouillage doit être annulé par l'UE ; et/ou une information concernant la séquence d'étalement appliquée à la couche brouilleuse ou à l'UE brouilleur comprend une séquence d'étalement appliquée à chaque couche brouilleuse ou à chaque UE brouilleur ; ou un index de la séquence d'étalement appliquée à chaque couche brouilleuse ou à chaque UE brouilleur ; ou une combinaison d'une séquence d'étalement appliquée à une couche brouilleuse ou à un UE brouilleur brouillant un signal reçu de l'UE ; ou un premier index indiquant un index, parmi toutes les combinaisons possibles, de la combinaison de la séquence d'étalement appliquée à la couche brouilleuse ou à l'UE brouilleur brouillant le signal reçu de l'UE ; et/ou

une information concernant une puissance de transmission appliquée à la couche brouilleuse ou à l'UE brouilleur comprend une puissance de transmission appliquée à chaque couche brouilleuse ou à chaque UE brouilleur ; ou un index de la puissance de transmission appliquée à chaque couche brouilleuse ou à chaque UE brouilleur ; ou une séquence combinée d'une puissance de transmission et d'une séquence d'étalement appliquée à chaque couche brouilleuse ou à chaque UE brouilleur brouillant le signal reçu de l'UE ; ou une séquence combinée d'une puissance de transmission et d'une séquence d'étalement appliquée à une couche brouilleuse ou à un UE brouilleur brouillant le signal reçu de l'UE ; ou un index d'une séquence combinée d'une puissance de transmission et d'une séquence d'étalement appliquée à chaque couche brouilleuse ou à chaque UE brouilleur ; ou un second index indiquant un index, parmi toutes les combinaisons possibles, d'une combinaison de la puissance de transmission et de la séquence d'étalement appliquée à la couche brouilleuse ou à l'UE brouilleur brouillant le signal reçu de l'UE ; et/ou

une information concernant le schéma de modulation et de codage appliqué à la couche brouilleuse ou à l'UE brouilleur comprend un schéma de modulation et de codage appliqué à chaque couche brouilleuse ou à chaque UE brouilleur ; ou un schéma de modulation et de codage appliqué à une première couche brouilleuse ou à un premier UE brouilleur, et une différence entre un schéma de modulation et de codage appliqué à une seconde couche brouilleuse ou à un second UE brouilleur et le schéma de modulation et de codage appliqué à la première couche brouilleuse ou au premier UE brouilleur ; ou une différence entre un schéma de modulation et de codage appliqué à chaque couche brouilleuse ou à chaque UE brouilleur et un schéma de modulation et de codage appliqué à l'UE ; et/ou

une information concernant le taux de codage appliqué à la couche brouilleuse ou à l'UE brouilleur comprend un taux de codage appliqué à chaque couche brouilleuse ou à chaque UE brouilleur ; ou un taux de codage appliqué à une première couche brouilleuse ou à un premier UE brouilleur, et une différence entre un taux de codage appliqué à une seconde couche brouilleuse ou à un second UE brouilleur et le taux de codage appliqué à la première couche brouilleuse ou au premier UE brouilleur ; ou une différence entre un taux de codage appliqué à chaque couche brouilleuse ou à chaque UE brouilleur et un taux de codage appliqué à l'UE ; et/ou

une information concernant l'index PRB appliqué à la couche brouilleuse ou à l'UE brouilleur comprend un index PRB appliqué à chaque couche brouilleuse ou à chaque UE brouilleur ; ou un index PRB appliqué à une première couche brouilleuse ou à un premier UE brouilleur, et une différence entre un index PRB appliqué à une seconde couche brouilleuse ou à un second UE brouilleur et l'index PRB appliqué à la première couche brouilleuse ou au premier UE brouilleur ; ou une différence entre un index PRB appliqué à chaque couche brouilleuse ou à chaque UE brouilleur et un index PRB appliqué à l'UE ; et/ou

une information concernant l'ordre de modulation appliqué à la couche brouilleuse ou à l'UE brouilleur comprend un ordre de modulation appliqué à chaque couche brouilleuse ou à chaque UE brouilleur ; ou un ordre de modulation appliqué à une première couche brouilleuse ou à un premier UE brouilleur, et une différence entre un ordre de modulation appliqué à une seconde couche brouilleuse ou à un second UE brouilleur et l'ordre de modulation appliqué à la première couche brouilleuse ou au premier UE brouilleur ; ou une différence entre un ordre de modulation appliqué à chaque couche brouilleuse ou à chaque UE brouilleur et un ordre de modulation appliqué à l'UE.

14. Équipement d'utilisateur (UE), l'UE étant **caractérisé en ce qu'**il comprend :

une unité d'obtention (401), configurée pour obtenir une information de brouillage indiquée par un dispositif de réseau par l'intermédiaire d'une signalisation ; si une information de brouillage n'inclut aucun paramètre, l'information de brouillage donnant l'instruction à l'UE de ne réaliser aucune opération d'annulation de brouillage, et si une information de brouillage inclut des paramètres, l'information de brouillage indiquant à l'UE d'annuler un brouillage au moyen de ces paramètres ; et une unité de traitement (402), configurée pour annuler tout ou partie ou rien du brouillage dans le signal reçu selon l'information de brouillage.

**15.** UE selon la revendication 14, dans lequel l'information de brouillage comprend une information concernant une couche brouilleuse ou une information concernant un UE brouilleur.

**16.** UE selon la revendication 15, dans lequel l'information de brouillage comprend une ou plusieurs combinaisons quelconques des paramètres suivants :

un numéro de la couche brouilleuse ou un numéro de l'UE brouilleur ;
un indicateur d'annulation de brouillage ;
une séquence d'étalement appliquée à la couche brouilleuse ou à l'UE brouilleur ;
une puissance de transmission appliquée à la couche brouilleuse ou à l'UE brouilleur ;
un schéma de modulation et de codage appliqué à la couche brouilleuse ou à l'UE brouilleur ;
un taux de codage appliqué à la couche brouilleuse ou à l'UE brouilleur ;
un ordre de modulation appliqué à la couche brouilleuse ou à l'UE brouilleur ;
un index de bloc de ressources physiques (PRB) appliqué à la couche brouilleuse ou à l'UE brouilleur ; ou
une identité temporaire de réseau radio (RNTI) ou une séquence d'embrouillage appliquée à la couche brouilleuse ou à l'UE brouilleur.

**17.** UE selon la revendication 16, dans lequel :

une information concernant l'indicateur d'annulation de brouillage comprend un indicateur d'annulation de brouillage correspondant à chaque couche brouilleuse ou à chaque UE brouilleur, l'indicateur d'annulation de brouillage correspondant à chaque couche brouilleuse ou à chaque UE brouilleur indiquant s'il faut annuler un brouillage de chaque couche brouilleuse ou de chaque UE brouilleur ; ou comprend un indicateur d'annulation de brouillage indiquant la couche brouilleuse ou l'UE brouilleur dont le brouillage doit être annulé par l'UE ; et/ou
une information concernant la séquence d'étalement appliquée à la couche brouilleuse ou à l'UE brouilleur comprend une séquence d'étalement appliquée à chaque couche brouilleuse ou à chaque UE brouilleur ; ou un index de la séquence d'étalement appliquée à chaque couche brouilleuse ou à chaque UE brouilleur ; ou une combinaison d'une séquence d'étalement appliquée à une couche brouilleuse ou à un UE brouilleur brouillant un signal reçu de l'UE ; ou un premier index indiquant un index, parmi toutes les combinaisons possibles, de la combinaison de la séquence d'étalement appliquée à la couche brouilleuse ou à l'UE brouilleur brouillant le signal reçu de l'UE ; et/ou
une information concernant une puissance de transmission appliquée à la couche brouilleuse ou à l'UE brouilleur comprend une puissance de transmission appliquée à chaque couche brouilleuse ou à chaque UE brouilleur ; ou un index de la puissance de transmission appliquée à chaque couche brouilleuse ou à chaque UE brouilleur ; ou une séquence combinée d'une puissance de transmission et d'une séquence d'étalement appliquée à chaque couche brouilleuse ou à chaque UE brouilleur brouillant le signal reçu de l'UE ; ou une séquence combinée d'une puissance de transmission et d'une séquence d'étalement appliquée à une couche brouilleuse ou à un UE brouilleur brouillant le signal reçu de l'UE ; ou un index d'une séquence combinée d'une puissance de transmission et d'une séquence d'étalement appliquée à chaque couche brouilleuse ou à chaque UE brouilleur ; ou un second index indiquant un index, parmi toutes les combinaisons possibles, d'une combinaison de la puissance de transmission et de la séquence d'étalement appliquée à la couche brouilleuse ou à l'UE brouilleur brouillant le signal reçu de l'UE ; et/ou
une information concernant le schéma de modulation et de codage appliqué à la couche brouilleuse ou à l'UE brouilleur comprend un schéma de modulation et de codage appliqué à chaque couche brouilleuse ou à chaque UE brouilleur ; ou un schéma de modulation et de codage appliqué à une première couche brouilleuse ou à un premier UE brouilleur, et une différence entre un schéma de modulation et de codage appliqué à une seconde couche brouilleuse ou à un second UE brouilleur et le schéma de modulation et de codage appliqué à la première couche brouilleuse ou au premier UE brouilleur ; ou une différence entre un schéma de modulation et de codage appliqué à chaque couche brouilleuse ou à chaque UE brouilleur et un schéma de modulation et de codage appliqué à l'UE ; et/ou
une information concernant le taux de codage appliqué à la couche brouilleuse ou à l'UE brouilleur comprend un taux de codage appliqué à chaque couche brouilleuse ou à chaque UE brouilleur ; ou un taux de codage appliqué à une première couche brouilleuse ou à un premier UE brouilleur, et une différence entre un taux de codage appliqué à une seconde couche brouilleuse ou à un second UE brouilleur et le taux de codage appliqué à la première couche brouilleuse ou au premier UE brouilleur ; ou une différence entre un taux de codage appliqué à chaque couche brouilleuse ou à chaque UE brouilleur et un taux de codage appliqué à l'UE ; et/ou
une information concernant l'index PRB appliqué à la couche brouilleuse ou à l'UE brouilleur comprend un index PRB appliqué à chaque couche brouilleuse ou à chaque UE brouilleur ; ou un index PRB appliqué à une première couche brouilleuse ou à un premier UE brouilleur, et une différence entre un index PRB appliqué à une seconde couche brouilleuse ou à un second UE brouilleur et l'index PRB appliqué à la première couche brouilleuse ou au premier UE brouilleur ; ou une différence entre un index PRB appliqué à chaque couche brouilleuse ou à chaque UE brouilleur et un index PRB appliqué à l'UE ; et/ou

une information concernant l'ordre de modulation appliqué à la couche brouilleuse ou à l'UE brouilleur comprend un ordre de modulation appliqué à chaque couche brouilleuse ou à chaque UE brouilleur ; ou un ordre de modulation appliqué à une première couche brouilleuse ou à un premier UE brouilleur, et une différence entre un ordre de modulation appliqué à une seconde couche brouilleuse ou à un second UE brouilleur et l'ordre de modulation appliqué à la première couche brouilleuse ou au premier UE brouilleur ; ou une différence entre un ordre de modulation appliqué à chaque couche brouilleuse ou à chaque UE brouilleur et un ordre de modulation appliqué à l'UE.

The network device determines interference information to be indicated to a User Equipment (UE), where the interference information instructs the UE to cancel all, a part, or none of interference in a received signal ⟋ 101

The network device indicates the interference information to the UE via signaling ⟋ 102

Fig.1

The User Equipment (UE) obtains interference information indicated by a network device via signaling ⟋ 201

The UE cancels all, a part, or none of interference in a received signal according to the interference information ⟋ 202

Fig.2

301          302

| Determining unit | Transmitting unit |

Fig.3

401

402

Obtaining unit ——— Processing unit

Fig.4

901

904

903

Processor ⟷ Bus interface ⟷ Transceiver

902

Memory ⟷

Fig.5

1001

1004

1003

Processor ⟷ Bus interface ⟷ Transceiver

1002

Memory ⟷

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510218100
- EP 2661002 A1

- WO 2014182541 A2
- WO 2015044408 A1

**Non-patent literature cited in the description**

- NAICS functionality, robustness, and configurability. *3GPP TSG-RAN WG1#77, R1 142322*

- Discussion on network assistance information for enhanced IS/IC receivers. *3GPP TSG-RAN WG4 Meeting #68, R1 133543*